# EUROPEAN PATENT APPLICATION

(11) **EP 4 580 250 A1**
(43) Date of publication of application: **02.07.2025**
(21) Application number: 22958506.2
(22) Date of filing: 16.09.2022
(51) Int. Cl.: H04W 36/00

(54) **PARAMETER DETERMINING METHOD AND APPARATUS**

(71) Applicant: Huawei Technologies Co., Ltd., Shenzhen, Guangdong 518129 (CN)
(72) Inventor: LUO, Hejia, Shenzhen, Guangdong 518129 (CN); WANG, Xiaolu, Shenzhen, Guangdong 518129 (CN); MENG, Xian, Shenzhen, Guangdong 518129 (CN); WANG, Jun, Shenzhen, Guangdong 518129 (CN); YAN, Min, Shenzhen, Guangdong 518129 (CN)
(74) Representative: Grünecker Patent- und Rechtsanwälte PartG mbB
(86) International application number: PCT/CN2022/119432
(87) International publication number: WO 2024/055316

(57) **Abstract**

This application discloses a parameter determining method and apparatus. The method includes: after receiving first information, a terminal apparatus in a satellite communication system may determine a second parameter based on the first information and a first parameter, where the first information may indicate an association relationship between the first parameter and the second parameter; the first parameter is a parameter related to coverage of a first satellite, and the second parameter is a parameter related to coverage of a second satellite; and the first satellite is a satellite that provides a service for the terminal apparatus, and the second satellite is a satellite that is to provide a service for the terminal apparatus. According to the method, after receiving the first information indicating the association relationship between the first parameter and the second parameter, the terminal apparatus can determine the second parameter based on the first parameter, without obtaining the second parameter from the first satellite or determining the second parameter by actually measuring a signal of the second satellite, thereby reducing energy consumption required for obtaining the second parameter.

## Description

### TECHNICAL FIELD

This application relates to the field of communication technologies, and in particular, to a parameter determining method and apparatus.

### BACKGROUND

In a mobile communication system, for example, a new radio (new radio, NR) system, a non-terrestrial network (non-terrestrial network, NTN) is introduced. In the NTN, a network device or a part of functions of the network device may be deployed on a high altitude platform station or a satellite, to provide seamless coverage for a terminal apparatus. Because the satellite moves around the earth, the terminal apparatus also moves relative to the satellite. As a result, the terminal apparatus may move from a coverage area of one satellite to a coverage area of another satellite. To ensure communication continuity and quality of service, the terminal needs to perform cell handover or cell reselection.

In the NTN, to perform cell handover or cell reselection, the terminal apparatus needs to obtain parameters related to coverage of a plurality of satellites. Optionally, the terminal apparatus may obtain the parameters related to the coverage of the plurality of satellites in one of the following manners.

Manner 1: A parameter related to coverage of each of the plurality of satellites may include a coverage parameter of the satellite. The terminal apparatus may obtain a coverage parameter of a serving satellite and a coverage parameter of a neighboring satellite from the serving satellite. The coverage parameter of each satellite may include: an ephemeris of the satellite, a coverage region of each beam of the satellite at a specified moment (for example, at a current moment or in a period of time after the current moment), a time period of each beam of the satellite in the coverage region, and the like.

Manner 2: A parameter related to coverage of each of the plurality of satellites may include a parameter obtained by a communication apparatus by measuring a signal of the satellite in a coverage area of the satellite, for example, a strength of the signal of the satellite that is obtained by the communication apparatus through measurement in the coverage area of the satellite. The terminal apparatus may obtain a coverage parameter of a serving satellite and a coverage parameter of a neighboring satellite from the serving satellite, measure a signal of the serving satellite in a coverage area of the serving satellite based on the coverage parameter of the serving satellite, and measure a signal of the neighboring satellite in a coverage area of the neighboring satellite based on the coverage parameter of the neighboring satellite, to determine a parameter (for example, a strength of the signal of the serving satellite) obtained by the communication apparatus by measuring the signal of the serving satellite in the coverage area of the serving satellite, and determine a parameter (for example, a strength of the signal of the neighboring satellite) obtained by measuring the signal of the neighboring satellite in the coverage area of the neighboring satellite.

Currently, to obtain the parameters related to the coverage of the plurality of satellites, the terminal apparatus needs to obtain coverage parameters of the plurality of satellites from the serving satellite, and/or actually measure signals of the plurality of satellites, resulting in high power consumption of the terminal apparatus. In addition, obtaining the coverage parameters of the plurality of satellites from the serving satellite also causes high overheads.

### SUMMARY

This application provides a parameter determining method and apparatus, to reduce power consumption when a terminal apparatus obtains a satellite parameter.

According to a first aspect, an embodiment of this application provides a parameter determining method. The method may be applied to a terminal apparatus in a satellite communication system. The terminal apparatus may receive first information indicating an association relationship between a first parameter and a second parameter, where the first parameter is a parameter related to coverage of a first satellite, and the second parameter is a parameter related to coverage of a second satellite; and the first satellite is a satellite that provides a service for the terminal apparatus, and the second satellite is a satellite that is to provide a service for the terminal apparatus. Then, the terminal apparatus may determine the second parameter based on the first information and the first parameter.

Optionally, the first parameter includes at least one of the following parameters: an ephemeris of the first satellite, a moving track of the first satellite, a coverage area of each beam of the first satellite at a specified moment, a time period in which each beam of the first satellite covers each coverage area, and a parameter obtained by a communication apparatus by measuring a signal of the first satellite in a coverage area of the first satellite; and the second parameter includes at least one of the following parameters: an ephemeris of the second satellite, a moving track of the second satellite, a coverage area of each beam of the second satellite at a specified moment, a time period in which each beam of the second satellite covers each coverage area, and a parameter expected to be obtained by the communication apparatus by measuring a signal of the second satellite in a coverage area of the second satellite.

According to the method, after receiving the first information indicating the association relationship between the first parameter and the second parameter, the terminal apparatus may determine, based on the first parameter related to the coverage of the first satellite, the second parameter related to the coverage of the second satellite, so that there is no need to obtain the second parameter from the first satellite or determine the second parameter by actually measuring the signal of the second satellite, and energy consumption required for obtaining the second parameter can be further reduced.

In a possible design, the first information may include a first time interval and a first indication. The first time interval is a difference between two moments. That the first indication indicates the association relationship includes: a first value is less than or equal to a first threshold. The first value is a value determined based on a difference between two strengths. The two strengths include: a strength of the signal that is from the first satellite and that is detected by the communication apparatus located in a first region at one of the two moments, and a strength of the signal that is from the second satellite and that is expected to be detected by the communication apparatus located in the first region at the other of the two moments. The first region is one region in the coverage area of the first satellite.

In this design, the first information received by the terminal apparatus includes the first time interval and the first indication. The terminal apparatus may determine, based on the first time interval and the first indication, an association relationship between a first strength of the signal that is detected from the first satellite and a second strength of the signal that is expected to be detected from the second satellite. In this way, the terminal apparatus can determine the second strength based on the first strength and the first information without obtaining coverage information of the second satellite from the first satellite, so that power consumption and overheads required for obtaining the second strength can be reduced.

In a possible design, the first parameter includes a first strength of the signal that is from the first satellite and that is detected by the terminal apparatus at a first moment; and the terminal apparatus may determine, based on the first time interval and the first strength, a second strength of the signal that is from the second satellite and that is expected to be detected by the terminal apparatus at a second moment, where a difference between the second moment and the first moment is the first time interval.

In this design, the terminal apparatus may determine, based on the first strength of the signal that is detected from the first satellite and the first information, the second strength of the signal that is expected to be detected from the second satellite, so that the terminal apparatus does not need to obtain coverage information of the second satellite from the first satellite for measurement, and also does not need to actually measure the signal from the second satellite, and power consumption and overheads required for obtaining the second strength are further reduced.

In a possible design, the first information further includes a first offset. The first offset may indicate an offset between two strengths. The terminal apparatus may determine the second strength based on the first time interval, the first strength, and the first offset. In this design, the terminal apparatus may accurately determine, based on the first strength of the signal that is detected from the first satellite and the first offset, the second strength of the signal that is expected to be detected from the second satellite, so that accuracy of predicting the second strength is improved.

In a possible design, the first information includes a second time interval and a second indication. The second time interval is a difference between two moments. That the second indication indicates the association relationship includes: a second value is less than or equal to a second threshold. The second value is a value determined based on a difference between two frequency offsets. The two frequency offsets include: a frequency offset of the signal that is from the first satellite and that is detected by the communication apparatus located in a second region at one of the two moments, and a frequency offset of the signal that is from the second satellite and that is expected to be detected by the communication apparatus located in the second region at the other of the two moments. The second region is one region in the coverage area of the first satellite.

In this design, the first information received by the terminal apparatus includes the second time interval and the second indication. The terminal apparatus may determine, based on the second time interval and the second indication, an association relationship between a first frequency offset of the signal that is detected from the first satellite and a second frequency offset of the signal that is expected to be detected from the second satellite. In this way, the terminal apparatus can determine the second frequency offset based on the first frequency offset and the first information, without obtaining, from the first satellite, parameters, for example, the ephemeris and a frequency compensation configuration of the second satellite, that are used to determine the second frequency offset, so that power consumption and overheads required for obtaining the parameter of the second satellite from the first satellite can be reduced.

In a possible design, the first parameter includes a first frequency offset of the signal that is of the first satellite and that is detected by the terminal apparatus at a third moment; and the terminal apparatus may determine, based on the second time interval and the first frequency offset, a second frequency offset of the signal that is from the second satellite and that is detected by the terminal apparatus at a fourth moment, where a difference between the fourth moment and the third moment is the second time interval.

In this design, the terminal apparatus may determine, based on the first frequency offset of the signal that is detected from the first satellite and the first information, the second frequency offset of the signal that is expected to be detected from the second satellite, so that the terminal apparatus does not need to obtain, from the first satellite, parameters, for example, the ephemeris and a frequency compensation configuration of the second satellite, that are used to determine the second frequency offset, and complexity of downlink synchronization of the terminal apparatus can be further reduced. In addition, in this design, the terminal apparatus does not need to search for the signal from the second satellite in frequency domain and angle domain, so that a quantity of times of blind detection can be reduced, search overheads in frequency domain and angle domain can be reduced when the signal from the second satellite is received, and energy consumption required for receiving the signal that is detected from the second satellite can be reduced.

In a possible design, the first information further includes a second offset. The second offset indicates an offset between two frequency offsets. The terminal apparatus may determine the second frequency offset based on the second time interval, the first frequency offset, and the second offset. In this design, the terminal apparatus may accurately determine, based on the first frequency offset and the second offset of the signal that is detected from the first satellite, the second frequency offset of the signal that is expected to be detected from the second satellite, so that accuracy of predicting the second frequency offset is improved.

In a possible design, the first information includes a third time interval and a third indication. The third time interval is at least one of the following: a difference between expected start time of two time periods, a difference between expected end time of the two time periods, and a difference between expected end time of one of the two time periods and expected start time of the other of the two time periods. The two time periods may include a time period in which the first satellite covers a third region and a time period in which the second satellite covers the third region. The third region is one region in the coverage area of the first satellite. That the third indication may indicate the association relationship includes: a third value is less than or equal to a third threshold. The third value is a value determined based on a difference between first duration and second duration, the first duration is duration of the time period in which the first satellite covers the third region, and the second duration is duration of the time period in which the second satellite covers the third region.

In this design, the first information received by the terminal apparatus may include the third time interval and the third indication. The terminal apparatus may determine, based on the third time interval and the third indication, an association relationship between a first time period in which the signal is detected from the first satellite and a second time period in which the signal is expected to be capable of being detected from the second satellite. In this way, the terminal apparatus can determine the second time period based on the first time period and the first information without obtaining a coverage parameter of the second satellite from the first satellite, so that overheads and power consumption for obtaining the coverage parameter of the second satellite can be reduced.

In a possible design, the first parameter includes a first time period in which the terminal apparatus detects the signal from the first satellite; and the terminal apparatus may determine, based on the third time interval and the first time period, a second time period in which the terminal apparatus is expected to be capable of detecting the signal from the second satellite.

In this design, the first information received by the terminal apparatus may include the third time interval and the third indication. The terminal apparatus may determine, based on the third time interval and the third indication, an association relationship between the first time period in which the signal is detected from the first satellite and the second time period in which the signal is expected to be capable of being detected from the second satellite. In this way, the terminal apparatus can determine the second time period based on the first time period and the first information without obtaining a coverage parameter of the second satellite from the first satellite, so that overheads and power consumption for obtaining the coverage parameter of the second satellite can be reduced.

In a possible design, the first information further includes a third offset, and the third offset may indicate an offset of the second duration relative to the first duration; and the terminal apparatus may determine the second time period based on the third time interval, the third offset, and the first time period. In this design, the terminal apparatus may determine the first time period in which the signal is detected from the first satellite, the third time interval, and the third offset, and accurately determine the second time period in which the terminal apparatus is expected to be capable of detecting the signal from the second satellite, so that accuracy of predicting the second time period is improved.

According to a second aspect, an embodiment of this application provides a parameter determining method. The method may be applied to a satellite communication system. A first satellite may send first information to a terminal apparatus, where the first information indicates an association relationship between a first parameter and a second parameter; the first parameter is a parameter related to coverage of a first satellite, and the second parameter is a parameter related to coverage of a second satellite; and the first satellite is a satellite that provides a service for the terminal apparatus, and the second satellite is a satellite that is to provide a service for the terminal apparatus. Then, the terminal apparatus may determine the second parameter based on the first information and the first parameter.

Optionally, the first parameter includes at least one of the following parameters: an ephemeris of the first satellite, a moving track of the first satellite, a coverage area of each beam of the first satellite at a specified moment, a time period in which each beam of the first satellite covers each coverage area, and a parameter obtained by a communication apparatus by measuring a signal of the first satellite in a coverage area of the first satellite; and the second parameter includes at least one of the following parameters: an ephemeris of the second satellite, a moving track of the second satellite, a coverage area of each beam of the second satellite at a specified moment, a time period in which each beam of the second satellite covers each coverage area, and a parameter expected to be obtained by the communication apparatus by measuring a signal of the second satellite in a coverage area of the second satellite.

According to the method, after receiving the first information indicating the association relationship between the first parameter and the second parameter, the terminal apparatus may determine, based on the first parameter related to the coverage of the first satellite, the second parameter related to the coverage of the second satellite, so that there is no need to obtain the second parameter from the first satellite or determine the second parameter by actually measuring the signal of the second satellite, and energy consumption required for obtaining the second parameter can be further reduced.

In a possible design, the first information includes a first time interval and a first indication. The first time interval is a difference between two moments. That the first indication may indicate the association relationship includes: a first value is less than or equal to a first threshold. The first value is a value determined based on a difference between two strengths. The two strengths include: a strength of the signal that is from the first satellite and that is detected by the communication apparatus located in a first region at one of the two moments, and a strength of the signal that is from the second satellite and that is expected to be detected by the communication apparatus located in the first region at the other of the two moments. The first region is one region in the coverage area of the first satellite.

In this design, the first information received by the terminal apparatus includes the first time interval and the first indication. The terminal apparatus may determine, based on the first time interval and the first indication, an association relationship between a first strength of the signal that is detected from the first satellite and a second strength of the signal that is expected to be detected from the second satellite. In this way, the terminal apparatus can determine the second strength based on the first strength and the first information without obtaining coverage information of the second satellite from the first satellite, so that power consumption and overheads required for obtaining the second strength can be reduced.

In a possible design, the first parameter includes a first strength of the signal that is from the first satellite and that is detected by the terminal apparatus at a first moment; and the terminal apparatus may determine, based on the first time interval and the first strength, a second strength of the signal that is from the second satellite and that is expected to be detected by the terminal apparatus at a second moment, where a difference between the second moment and the first moment is the first time interval.

In this design, the terminal apparatus may determine, based on the first strength of the signal that is detected from the first satellite and the first information, the second strength of the signal that is expected to be detected from the second satellite, so that the terminal apparatus does not need to obtain coverage information of the second satellite from the first satellite for measurement, and also does not need to actually measure the signal from the second satellite, and power consumption and overheads required for obtaining the second strength are further reduced.

In a possible design, the first information further includes a first offset. The first offset may indicate an offset between two strengths. The terminal apparatus may determine the second strength based on the first time interval, the first strength, and the first offset. In this design, the terminal apparatus may accurately determine, based on the first strength of the signal that is detected from the first satellite and the first offset, the second strength of the signal that is expected to be detected from the second satellite, so that accuracy of predicting the second strength is improved.

In a possible design, the first information includes a second time interval and a second indication. The second time interval is a difference between two moments. That the second indication may indicate the association relationship includes: a second value is less than or equal to a second threshold. The second value may be a value determined based on a difference between two frequency offsets. The two frequency offsets include: a frequency offset of the signal that is from the first satellite and that is detected by the communication apparatus located in a second region at one of the two moments, and a frequency offset of the signal that is from the second satellite and that is expected to be detected by the communication apparatus located in the second region at the other of the two moments. The second region is one region in the coverage area of the first satellite.

In this design, the first information received by the terminal apparatus includes the second time interval and the second indication. The terminal apparatus may determine, based on the second time interval and the second indication, an association relationship between a first frequency offset of the signal that is detected from the first satellite and a second frequency offset of the signal that is expected to be detected from the second satellite. In this way, the terminal apparatus can determine the second frequency offset based on the first frequency offset and the first information, without obtaining, from the first satellite, parameters, for example, the ephemeris and a frequency compensation configuration of the second satellite, that are used to determine the second frequency offset, so that power consumption and overheads required for obtaining the parameter of the second satellite from the first satellite can be reduced.

In a possible design, the first parameter includes a first frequency offset of the signal that is of the first satellite and that is detected by the terminal apparatus at a third moment; and the terminal apparatus may determine, based on the second time interval and the first frequency offset, a second frequency offset of the signal that is from the second satellite and that is detected by the terminal apparatus at a fourth moment, where a difference between the fourth moment and the third moment is the second time interval.

In this design, the terminal apparatus may determine, based on the first frequency offset of the signal that is detected from the first satellite and the first information, the second frequency offset of the signal that is expected to be detected from the second satellite, so that the terminal apparatus does not need to obtain, from the first satellite, parameters, for example, the ephemeris and a frequency compensation configuration of the second satellite, that are used to determine the second frequency offset, and complexity of downlink synchronization of the terminal apparatus can be further reduced. In addition, in this design, the terminal apparatus does not need to search for the signal from the second satellite in frequency domain and angle domain, so that a quantity of times of blind detection can be reduced, search overheads in frequency domain and angle domain can be reduced when the signal from the second satellite is received, and energy consumption required for receiving the signal that is detected from the second satellite can be reduced.

In a possible design, the first information further includes a second offset. The second offset indicates an offset between two frequency offsets. The terminal apparatus may determine the second frequency offset based on the second time interval, the first frequency offset, and the second offset. In this design, the terminal apparatus may accurately determine, based on the first frequency offset and the second offset of the signal that is detected from the first satellite, the second frequency offset of the signal that is expected to be detected from the second satellite, so that accuracy of predicting the second frequency offset is improved.

In a possible design, the first information includes a third time interval and a third indication. The third time interval is at least one of the following: a difference between expected start time of two time periods, a difference between expected end time of the two time periods, and a difference between expected end time of one of the two time periods and expected start time of the other of the two time periods. The two time periods may include a time period in which the first satellite covers a third region and a time period in which the second satellite covers the third region. The third region is one region in the coverage area of the first satellite. That the third indication may indicate the association relationship includes: a third value is less than or equal to a third threshold. The third value is a value determined based on a difference between first duration and second duration, the first duration is duration of the time period in which the first satellite covers the third region, and the second duration is duration of the time period in which the second satellite covers the third region.

In this design, the first information received by the terminal apparatus may include the third time interval and the third indication. The terminal apparatus may determine, based on the third time interval and the third indication, an association relationship between a first time period in which the signal is detected from the first satellite and a second time period in which the signal is expected to be capable of being detected from the second satellite. In this way, the terminal apparatus can determine the second time period based on the first time period and the first information without obtaining a coverage parameter of the second satellite from the first satellite, so that overheads and power consumption for obtaining the coverage parameter of the second satellite can be reduced.

In a possible design, the first parameter includes a first time period in which the terminal apparatus detects the signal from the first satellite; and the terminal apparatus may determine, based on the third time interval and the first time period, a second time period in which the terminal apparatus is expected to be capable of detecting the signal from the second satellite.

In this design, the first information received by the terminal apparatus may include the third time interval and the third indication. The terminal apparatus may determine, based on the third time interval and the third indication, an association relationship between the first time period in which the signal is detected from the first satellite and the second time period in which the signal is expected to be capable of being detected from the second satellite. In this way, the terminal apparatus can determine the second time period based on the first time period and the first information without obtaining a coverage parameter of the second satellite from the first satellite, so that overheads and power consumption for obtaining the coverage parameter of the second satellite can be reduced.

In a possible design, the first information further includes a third offset, and the third offset indicates an offset of the second duration relative to the first duration; and the terminal apparatus may determine the second time period based on the third time interval, the third offset, and the first time period. In this design, the terminal apparatus may determine the first time period in which the signal is detected from the first satellite, the third time interval, and the third offset, and accurately determine the second time period in which the terminal apparatus is expected to be capable of detecting the signal from the second satellite, so that accuracy of predicting the second time period is improved.

According to a third aspect, an embodiment of this application provides a parameter determining apparatus. The parameter determining apparatus includes units configured to perform the steps in the first aspect.

According to a fourth aspect, an embodiment of this application provides a parameter determining apparatus. The parameter determining apparatus includes at least one processing element and at least one storage element. The at least one storage element is configured to store a program and data, and the at least one processing element is configured to read and execute the program and the data that are stored in the storage element, so that the method according to the first aspect of this application is implemented.

According to a fifth aspect, an embodiment of this application provides a communication system. The communication system includes a terminal apparatus configured to perform the method provided in the first aspect, and a first satellite configured to send first information to the terminal apparatus.

According to a sixth aspect, an embodiment of this application further provides a computer program. When the computer program is run on a computer, the method according to the first aspect is implemented.

According to a seventh aspect, an embodiment of this application further provides a computer-readable storage medium. The computer-readable storage medium stores a computer program; and when the computer program is executed by a computer, the method according to the first aspect is implemented.

According to an eighth aspect, an embodiment of this application further provides a chip. The chip is configured to read a computer program stored in a memory, so that the method according to the first aspect is implemented.

According to a ninth aspect, an embodiment of this application further provides a chip system. The chip system includes a processor, configured to support a computer apparatus to implement the method according to the first aspect. In a possible design, the chip system further includes a memory, and the memory is configured to store a program and data that are necessary for the computer apparatus. The chip system may include a chip, or may include a chip and another discrete component.

For technical effects that can be achieved in any one of the third aspect to the ninth aspect, refer to descriptions of technical effects that can be achieved in any possible design in the first aspect. Repeated descriptions are not provided.

### BRIEF DESCRIPTION OF DRAWINGS

FIG. 1A is a diagram of an application scenario of a transparent mode according to an embodiment of this application;
FIG. 1B is a diagram of an application scenario of a regenerative mode according to an embodiment of this application;
FIG. 2A is a diagram of an architecture of a communication system according to an embodiment of this application;
FIG. 2B is a diagram of an architecture of another communication system according to an embodiment of this application;
FIG. 3 is a flowchart of a parameter determining method according to an embodiment of this application;
FIG. 4 is a diagram of path loss related variables of different satellites in a same orbit according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

To make objectives, technical solutions, and advantages of embodiments of this application clearer, the following describes embodiments of this application in detail with reference to the accompanying drawings.

In the following, some terms in this application are explained and described, to facilitate understanding of a person skilled in the art.
(1) A communication apparatus is generally an apparatus having a communication function. For example, the communication apparatus may be but is not limited to a terminal apparatus, a network device, an access point, a relay device, or the like.
(2) A network device is a device that connects a terminal apparatus to a wireless network in a mobile communication system. As a node in a radio access network, the network device may also be referred to as a base station, a radio access network (radio access network, RAN) node (or device), an access point (access point, AP), or an access network (access network, AN) device.

Currently, some examples of the network device are as follows: a next generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a transmission point (transmission reception point, TRP), a transmission point (transmission point, TP), a mobile switching center, a home base station (for example, a home evolved NodeB or a home NodeB, HNB), a baseband unit (baseband unit, BBU), or the like.

(3) A terminal apparatus is an apparatus that provides voice and/or data connectivity for a user. The terminal apparatus may be a terminal device, or may be a chip configured to implement a function of the terminal device. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, customer premise equipment (customer premise equipment, CPE), a terminal agent, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

(4) Quasi colocation (quasi colocation, QCL): If a channel feature of one antenna port may be derived from another antenna port, the two ports are QCLed. In other words, when the two antenna ports are quasi colocated, a channel estimation result obtained based on one antenna port may be applied to the other port. That is, pilots on the two antenna ports may reuse parameters with each other.

(5) NTN communication:
NTN communication may use devices such as an uncrewed aerial vehicle, a high altitude platform station (high altitude platform station, HAPS), and a satellite for networking, to provide services such as data transmission and voice communication for terminal apparatuses. A height between the high altitude platform station and the ground can be 8 to 50 km (km). A satellite communication system in the NTN communication may include a geostationary earth orbit (geostationary earth orbit, GEO) satellite, a medium earth orbit (medium earth orbit, MEO) satellite, and a low earth orbit (low earth orbit, LEO) satellite based on a satellite altitude, namely, a satellite orbit altitude. Descriptions are separately provided below.
1. The GEO satellite is also referred to as a geosynchronous satellite or a stationary satellite. The GEO satellite moves at a same speed as rotation of the earth. Therefore, the GEO satellite remains stationary relative to the ground. Correspondingly, a cell of the GEO satellite is also stationary. An orbit of the GEO satellite is high. For example, an orbit altitude of the GEO satellite may be 35786 km. Therefore, a large coverage area can be provided. A diameter of the cell of the GEO satellite may be usually 500 km.
2. The MEO satellite is an asynchronous satellite. The asynchronous satellite moves at a different speed from rotation of the earth. Therefore, the asynchronous satellite moves relative to the ground. An orbit altitude of the MEO satellite ranges from 2000 km to 35786 km, and global coverage can be achieved by using a small quantity of satellites. The MEO satellite is mainly configured for positioning and navigation.
3. The LEO satellite is another type of asynchronous satellite. An orbit altitude of the LEO satellite ranges from 300 km to 2000 km. The LEO satellite has advantages of a low data transmission delay, a low transmission loss, and low transmission costs. The LEO satellite moves fast relative to the ground, at a speed of about 7 km/s. Therefore, a coverage region of a service provided by the LEO satellite also moves accordingly.

In the NTN communication, a working mode of an NTN device (for example, the high altitude platform station or the satellite) may include a transparent (transparent) mode and a regenerative (regenerative) mode.

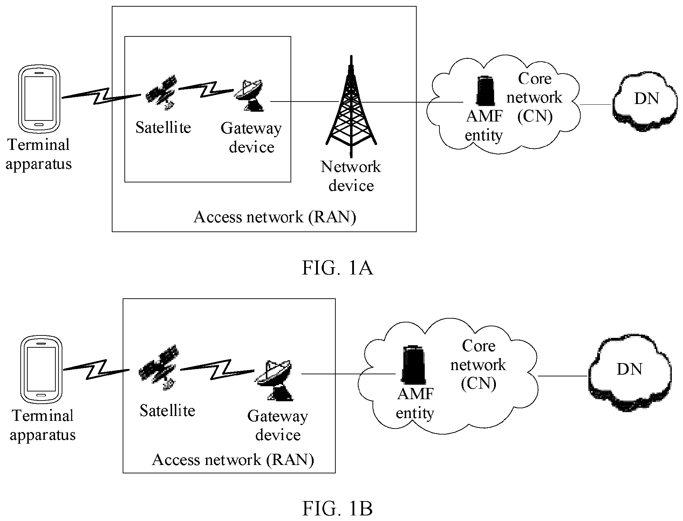

The NTN device has a relay forwarding function when working in the transparent mode. For example, an application scenario of the transparent mode may be shown in FIG. 1A. In the application scenario shown in FIG. 1A, a network device is disposed on the ground, and may be connected to a data network (data network, DN) through a core network (core network, CN). The satellite and a gateway device may be used as a remote radio unit (remote radio unit, RRU) of the network device, and are configured to transmit information between the network device and a terminal apparatus.

When working in the regenerative mode, the NTN device has a data processing capability, and has all or some capabilities of the network device. For example, an application scenario of the regenerative mode may be shown in FIG. 1B. In the application scenario shown in FIG. 1B, the satellite may be used as a network device, form an access network with a gateway device, and communicate with a core network through the gateway device. For example, the satellite may be used as the network device, and establish an N2 interface connection or an Ng interface connection to an access and mobility management function (access and mobility management function, AMF) entity in the core network through the gateway device. In addition, the satellite may further provide a wireless access service for the terminal apparatus.

(6) In this application, a parameter related to coverage of the satellite may be a parameter related to cell coverage of the satellite, or may be a parameter related to a synchronization signal block (synchronization signal block, SSB) sent by the satellite, or may be a parameter related to a beam sent by the satellite, or may be a parameter related to a pilot port of the satellite.

(7) In this application, a strength of a signal that is from the satellite and that is detected by the communication apparatus may be a strength of a signal that is from the satellite and that is detected by the communication apparatus and whose strength is greater than a signal strength threshold, or may be a strength of a first signal that is from the satellite and that is detected by the communication apparatus. The first signal is a signal sent by the satellite to the communication apparatus. A strength range of the first signal is not limited in this application.

(8) In this application, a parameter used to reflect a strength of a signal may include but is not limited to at least one of the following: reference signal received power (reference signal received power, RSRP), reference signal received quality (reference signal received quality, RSRQ), or a received signal strength indication (received signal strength indication, RSSI).

(9) In this application, a frequency offset is used to represent an amplitude of frequency swing of a frequency modulated wave, and may be represented by an absolute value or a relative value. When the frequency offset is represented by using the absolute value, the frequency offset may represent a frequency difference between a maximum frequency swing value and a center frequency. In this case, a unit of the frequency offset may include but is not limited to at least one of the following: hertz (Hz), and kilohertz (kHz). When the frequency offset is represented by using the relative value, the frequency offset may represent a relative relationship between a maximum frequency swing value and a center frequency. In this case, a unit of the frequency offset may be parts per million (parts per million, ppm).

In this application, an angle may alternatively be used to represent the amplitude of the frequency swing of the frequency modulated wave. The angle may be an included angle between a maximum swing frequency and the center frequency. Therefore, the frequency offset in this application may also be replaced with an angle or Doppler information.

In embodiments of this application, unless otherwise specified, a quantity of a noun indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. "At least one of the following items (pieces)" or a similar expression thereof means any combination of these items (pieces), including any combination of singular items (pieces) or plural items (pieces).

In addition, it should be understood that, in descriptions of this application, terms such as "first" and "second" are merely used for distinguishing and description, but should not be understood as indicating or implying relative importance, or should not be understood as indicating or implying a sequence.

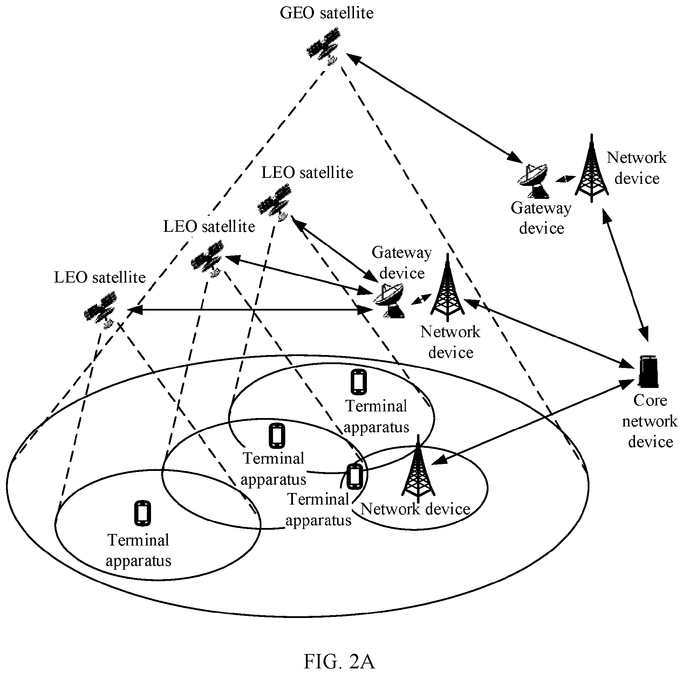

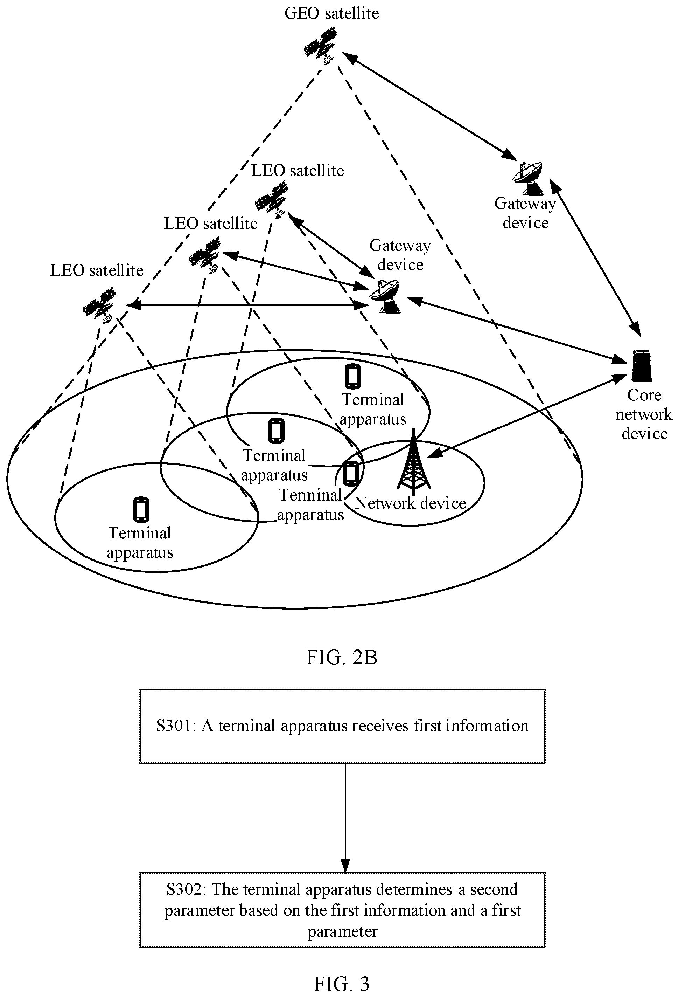

FIG. 2A shows a network architecture of a satellite communication system. In the system shown in FIG. 2A, a working mode of an NTN device is a transparent mode. FIG. 2B shows a network architecture of another satellite communication system. In the system shown in FIG. 2B, a working mode of an NTN device is a regenerative mode.

In the satellite communication system shown in FIG. 2A or FIG. 2B, the NTN device and a network device on the ground may be interconnected through a core network, or may be interconnected through an interface defined between network devices. For example, in NR, the NTN device and the network device on the ground may be interconnected through an Xn interface or an NG interface. The Xn interface is an interface between network devices, and the NG interface is an interface between a network device and a core network.

Optionally, a link between the NTN device and a terminal apparatus may be referred to as a service link (service link), and a link between the NTN device and a gateway device may be referred to as a feeder link (feeder link).

It should be noted that the communication system shown in FIG. 2A or FIG. 2B does not constitute a limitation on the communication system to which embodiments of this application are applicable. Therefore, the method provided in embodiments of this application is further applicable to communication systems of various standards. For example, embodiments of this application may be applied to a 4th generation mobile communication system (4th generation, 4G) system, a 5th generation (5th generation, 5G) communication system, an NTN system, vehicle to everything (vehicle to everything, V2X), long term evolution-internet of vehicles (LTE-vehicle, LTE-V), vehicle to vehicle (vehicle to vehicle, V2V), internet of vehicles, machine-type communication (machine-type communication, MTC), internet of things (internet of things, IoT), long term evolution-machine to machine (LTE-machine to machine, LTE-M), machine to machine (machine to machine, M2M), or a future mobile communication system. In addition, it should be further noted that names of the network elements in the communication system are not limited in embodiments of this application either. For example, in communication systems of different standards, network elements may have other names. For another example, when the plurality of network elements are integrated into a same physical device, the physical device may alternatively have another name.

When an asynchronous satellite moves around the earth, the terminal apparatus also moves relative to the satellite. As a result, the terminal apparatus may move from a coverage area of one satellite to a coverage area of another satellite. To ensure communication continuity and quality of service, the terminal needs to perform cell handover or cell reselection. When cell handover or cell reselection needs to be performed, the terminal apparatus needs to obtain parameters related to coverage of a plurality of satellites. When obtaining the parameters related to the coverage of the plurality of satellites, the terminal apparatus needs to obtain coverage parameters of the plurality of satellites from a serving satellite, and/or actually measure signals of the plurality of satellites. Consequently, power consumption of the terminal apparatus is high. In addition, obtaining the coverage parameters of the plurality of satellites from the serving satellite also causes high overheads.

Therefore, a technical problem to be resolved in this application includes at least one of the following: 1. reduce power consumption when the terminal apparatus obtains the satellite parameter; and 2. reduce overheads when the terminal apparatus obtains the coverage parameter of the satellite from the serving satellite.

To resolve at least one of the foregoing problems, embodiments of this application provide a parameter determining method. The method may be applied to the communication system shown in FIG. 2A or FIG. 2B. The following describes a procedure of the method in detail with reference to a flowchart shown in FIG. 3.

S301: A terminal apparatus receives first information.

The first information may indicate an association relationship between a first parameter and a second parameter. The first parameter is a parameter related to coverage of a first satellite, and the second parameter is a parameter related to coverage of a second satellite. For example, the first parameter is a coverage parameter of the first satellite, and the second parameter is a coverage parameter of the second satellite. For another example, the first parameter is a parameter obtained by a communication apparatus by measuring a signal of the first satellite in a coverage area of the first satellite, and the second parameter is a parameter expected to be obtained by the communication apparatus by measuring a signal of the second satellite in a coverage area of the second satellite.

In this application, the first satellite may be a satellite that provides a service for the terminal apparatus. In other words, the first satellite may be a serving satellite of the terminal apparatus. The second satellite may be a satellite that is to provide a service for the terminal apparatus. For example, when the terminal apparatus hands over or reselects from the first satellite to the second satellite, the second satellite may be the satellite that is to provide a service for the terminal apparatus. Optionally, the first satellite and the second satellite may be satellites moving in a same orbit.

Optionally, the first parameter may include at least one parameter: the coverage parameter of the first satellite, and the parameter obtained by the communication apparatus by measuring the signal of the first satellite in the coverage area of the first satellite.

The coverage parameter of the first satellite may include the following:
1. Ephemeris of the first satellite: includes a parameter such as reference time or an orbit of the first satellite, indicating a correspondence between a location of the first satellite and time. The ephemeris of the first satellite may be used to accurately calculate, predict, describe, and track a moving status of the first satellite, for example, time, a location, or a speed, and determine a moving orbit of the first satellite.
2. Moving track of the first satellite: includes a parameter such as coordinates of at least one location in the moving track of the first satellite. The moving track of the first satellite may be determined based on the ephemeris of the first satellite. When the moving track is around the earth, the moving track may be the moving orbit.
3. Coverage area of each beam of the first satellite at a specified moment: The coverage area may also be referred to as a coverage region, and may be indicated by using a longitude and a latitude, or may be indicated by using an angle and boresight (boresight). The first satellite may include a plurality of beams, for example, may include a dozen to hundreds of beams. Each beam of the first satellite may correspond to a set including a longitude and a latitude, or correspond to a set including an angle and boresight.
4. Time period in which each beam of the first satellite covers each coverage area: may include start time and end time, indicating the time period in which each beam of the first satellite covers each coverage area. For example, a current coverage area of a beam 1 of the first satellite is a range 1, start time of a time period of the coverage area 1 of the beam 1 is Tₐ, and end time is T_{b}.

The parameter obtained by the communication apparatus by measuring the signal of the first satellite in the coverage area of the first satellite may include but is not limited to at least one of the following: a strength of the signal that is of the first satellite and that is measured by the communication apparatus in the coverage area of the first satellite, and a frequency offset of the signal that is from the second satellite and that is detected by the communication apparatus in the coverage area of the first satellite.

Optionally, the second parameter may include at least one of the following parameters: the coverage parameter of the second satellite, and the parameter expected to be obtained by the communication apparatus by measuring the signal of the first satellite in the coverage area of the second satellite. The coverage parameter of the second satellite may include: an ephemeris of the second satellite, a moving track of the second satellite, a coverage area of each beam of the second satellite at a specified moment, and a time period in which each beam of the second satellite covers each coverage area. For specific content of the coverage parameter of the second satellite, refer to the descriptions of the coverage parameter of the first satellite. Only the first satellite is replaced with the second satellite, and details are not described herein again. The parameter expected to be obtained by the communication apparatus by measuring the signal of the second satellite in the coverage area of the second satellite includes but is not limited to at least one of the following: a strength of the signal that is of the second satellite and that is expected to be measured by the communication apparatus in the coverage area of the second satellite, and a frequency offset of the signal that is from the second satellite and that is expected to be detected by the communication apparatus in the coverage area of the second satellite.

In addition, the association relationship between the first parameter and the second parameter may also be referred to as an inter-satellite quasi-colocation relationship or an inter-satellite correlation, and may indicate that the parameter related to the coverage of the second satellite may be derived by using the parameter related to the coverage of the first satellite.

Optionally, the terminal apparatus may receive the first information from the first satellite. Correspondingly, the first satellite may send the first information to the terminal apparatus. The first satellite may be a satellite working in a transparent mode or a regenerative mode. When the first satellite is the satellite in the transparent mode, the first satellite may receive the first information from a network device located on the ground. When the first satellite is the satellite in the regenerative mode, the first satellite may determine the first information.

The following describes a determining process of the first information by using an example in which the first satellite determines the first information. The determining process may include steps A1 and A2.

A1: The first satellite obtains second information.

The second information may include the ephemeris of the first satellite, the ephemeris of the second satellite, and at least one of the following: a coverage area of a beam of the first satellite, a coverage area of a beam of the second satellite, equivalent isotropically radiated power (equivalent isotropically radiated power, EIRP) of the beam of the first satellite, and EIRP of the beam of the second satellite.

Optionally, the first satellite may obtain the ephemeris of the first satellite and the coverage area of the beam of the first satellite from coverage information of the first satellite, and locally obtain the EIRP of the beam of the first satellite. The first satellite may obtain coverage information of the second satellite and the EIPR of the beam of the second satellite from the second satellite, where the coverage information of the second satellite includes the ephemeris of the second satellite and the coverage area of the beam of the second satellite.

A2: The first satellite determines, based on the second information, the association relationship between the first parameter and the second parameter, and determines the first information indicating the association relationship between the first parameter and the second parameter. The following specifically describes, with reference to different association relationships, a process in which the first satellite determines the association relationship between the first parameter and the second parameter and the first information. Details are not described herein.

S302: The terminal apparatus determines the second parameter based on the first information and the first parameter.

Optionally, when the first parameter is the coverage parameter of the first satellite, and the second parameter is the coverage parameter of the second satellite, the terminal apparatus may obtain the coverage parameter of the first satellite from the first satellite, and determine the coverage parameter of the second satellite based on the association relationship, between the first parameter and the second parameter, that is indicated by the first information. For example, the first information indicates that the first satellite and the second satellite move in a same orbit; and for any location in the orbit, the first satellite arrives ΔTₐ earlier than the second satellite. The terminal apparatus may determine the ephemeris of the second satellite based on the ephemeris of the first satellite. For another example, the first information indicates that the first satellite and the second satellite move in a same orbit; and for any location in the orbit, the first satellite arrives ΔT_{b} earlier than the second satellite, and the first satellite and the second satellite use a same beam topology. The terminal apparatus may determine the coverage area of the beam of the second satellite based on the coverage area of the beam of the first satellite. According to the method, after receiving the first information indicating an association relationship between the coverage parameter of the first satellite and the coverage parameter of the second satellite, the terminal apparatus may determine the coverage parameter of the second satellite based on the coverage parameter of the first satellite, so that the coverage parameter of the second satellite does not need to be obtained from the first satellite, overheads for obtaining the coverage parameter of the satellite can be reduced, and energy consumption required for receiving the coverage parameter of the second satellite can be reduced.

Optionally, when the first parameter is the parameter obtained by the communication apparatus by measuring the signal of the first satellite in the coverage area of the first satellite, and the second parameter is the parameter expected to be obtained by the communication apparatus by measuring the signal of the second satellite in the coverage area of the second satellite, the terminal apparatus may measure the signal of the first satellite to obtain the first parameter, and determine, based on the association relationship, between the first parameter and the second parameter, that is indicated by the first information, the second parameter expected to be obtained by the terminal apparatus by measuring the signal of the second satellite when second satellite serves the terminal apparatus. According to the method, after receiving the first information indicating the association relationship between the first parameter and the second parameter, the terminal apparatus may determine, based on the first parameter obtained by the terminal apparatus by measuring the signal of the first satellite, the second parameter expected to be obtained by the terminal apparatus by measuring the signal of the second satellite when the second satellite serves the terminal apparatus, so that the second parameter obtained by the terminal apparatus by measuring the signal of the second satellite when the second satellite serves the terminal apparatus does not need to be actually measured, a delay for obtaining the second parameter can be reduced, and energy consumption required by the terminal apparatus for measuring the signal of the second satellite can be reduced.

According to the method shown in FIG. 3, after receiving the first information indicating the association relationship between the first parameter and the second parameter, the terminal apparatus may determine, based on the first parameter related to the coverage of the first satellite, the second parameter related to the coverage of the second satellite, so that there is no need to obtain the second parameter from the first satellite or determine the second parameter by actually measuring the signal of the second satellite, and energy consumption required for obtaining the second parameter can be further reduced.

Optionally, in the method shown in FIG. 3, the first information may indicate the association relationship between the first parameter and the second parameter in at least one of the following manners.

Manner 1: The first information may include a first time interval and a first indication. The first time interval is a difference between two moments. That the first indication may indicate the association relationship between the first parameter and the second parameter includes: a first value is less than or equal to a first threshold. The first value may be a value determined based on a difference between two strengths. The two strengths include: a strength of the signal that is from the first satellite and that is detected by the communication apparatus located in a first region at one of the two moments, and a strength of the signal that is from the second satellite and that is expected to be detected by the communication apparatus located in the first region at the other of the two moments. In short, in the first region, a strength change of the signal of the first satellite is the same as or similar to a strength change of the signal of the second satellite.

Optionally, the first value may be an absolute value of the difference between the two strengths, or may be a value in a proportional relationship with the difference between the two strengths, or may be a value obtained by performing normalization processing on the difference between the two strengths.

In addition, the first indication may be specified indication information, for example, may be represented as an inter-satellite quasi-colocation type A (Sat-QCL typeA). The first region may be one region in the coverage area of the first satellite. For example, at one of the two moments, the first region is one region in the coverage area of the first satellite. The first threshold may be preset, or may be determined by the first satellite, or may be obtained by the first satellite from another communication apparatus. This is not limited in this application.

For example, a representation form of the first information may be as follows:

```
     {
        Sat-QCL Type1
        {
           CellID #2
           Sat-QCL typeA
           time-interval t1
     }
```

CellID #2 is a cell identifier of a cell of the second satellite, Sat-QCL typeA is the first indication, and the value t1 of the time-interval (time-interval) parameter is the first time interval. The first information may indicate that a parameter related to coverage of a cell whose cell identifier is 2 and a parameter related to coverage of a cell of the first satellite have the association relationship in Manner 1.

According to the method, the first information received by the terminal apparatus includes the first time interval and the first indication. The terminal apparatus may determine, based on the first time interval and the first indication, an association relationship between a first strength of the signal that is detected from the first satellite and a second strength of the signal that is expected to be detected from the second satellite. In this way, the terminal apparatus can determine the second strength based on the first strength and the first information without obtaining coverage information of the second satellite from the first satellite, so that power consumption and overheads required for obtaining the second strength can be reduced.

Optionally, in step A2, the first satellite may determine, based on the ephemeris of the first satellite, the ephemeris of the second satellite, the EIRP of the beam of the first satellite, and the EIRP of the beam of the second satellite, that the first parameter and the second parameter have the association relationship in Manner 1, and determine the first information based on the association relationship.

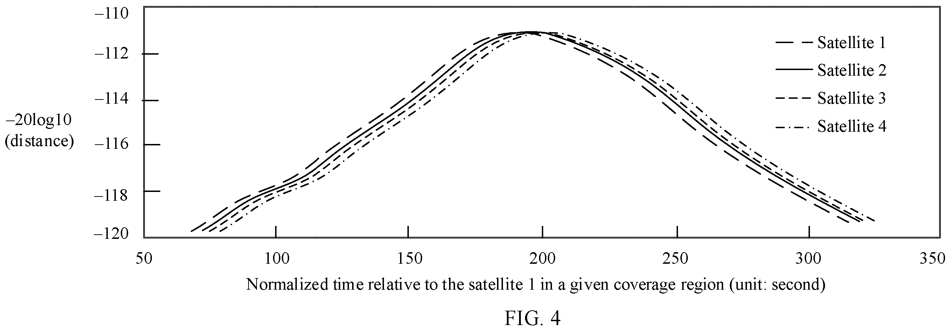

Path losses of different satellites that cross the top in a same orbit are similar. For example, a satellite 1 to a satellite 4 are satellites in a same orbit. In FIG. 4, a horizontal coordinate is normalized time relative to the satellite 1 in a given coverage region, and a vertical coordinate is -20log10 (distance), and a unit is decibel (dB), which may be used to reflect impact of a transmission distance on a path loss. At a given frequency, a greater distance indicates a greater path loss. The normalized time relative to the satellite 1 in the given coverage region is time obtained after time for the satellite 1 to the satellite 4 to cover the given coverage region is aligned with time for the satellite 1 to cover the given coverage region. For example, when time for the satellite 1 to cover the given coverage region is 50 to 350 seconds, and time for the satellite 2 to cover the given coverage region is 50+ΔT to 350+ΔT seconds, time obtained after the time for the satellite 2 to cover the given coverage region is aligned with the time for the satellite 1 to cover the given coverage region is 50 to 350 seconds, that is, the normalized time relative to the satellite 1 in the given coverage region is 50 to 350 seconds.

As shown in FIG. 4, a difference between path losses of different satellites that cross the top in a same orbit is less than 1 dB. Therefore, if different satellites in a same orbit use same EIRP, strengths (for example, SINR) of signals detected by the terminal apparatus are also similar. Therefore, step A2 may include: The first satellite may determine the moving orbit of the first satellite based on the ephemeris of the first satellite, and determine the moving orbit of the second satellite based on the ephemeris of the second satellite, to determine whether the first satellite and the second satellite move in a same orbit. If the first satellite and the second satellite move in the same orbit, and the first satellite and the second satellite use same EIRP to cover the first region, the first satellite may determine that the first parameter and the second parameter have the association relationship in Manner 1, to determine that the first information includes the first indication.

Optionally, the first satellite may determine the first time interval based on the ephemeris of the first satellite and the ephemeris of the second satellite. For example, the first satellite may determine, based on the ephemeris of the first satellite and the ephemeris of the second satellite, that the first satellite and the second satellite move in the same orbit; and for any location in the orbit, the first satellite arrives ΔTₐ earlier than the second satellite, and therefore the first satellite may determine that the first time interval is ΔTₐ.

Optionally, in Manner 1, the first parameter may include the first strength of the signal that is from the first satellite and that is detected by the terminal apparatus at a first moment. In this case, S302 may include: The terminal apparatus determines, based on the first time interval and the first strength, the second strength of the signal that is from the second satellite and that is expected to be detected by the terminal apparatus at a second moment. A difference between the second moment and the first moment is the first time interval.

For example, the first time interval in the first information is ΔT₁. If the terminal apparatus detects, at a moment T1, that the first strength of the signal from the first satellite is P1, the terminal apparatus may determine that the second strength of the signal that is from the second satellite and that is expected to be detected at a moment T2 is approximately P1, where T2=T1+ΔT₁.

According to the method, the terminal apparatus may determine, based on the first strength of the signal that is detected from the first satellite and the first information, the second strength of the signal that is expected to be detected from the second satellite, so that the terminal apparatus does not need to obtain the coverage information of the second satellite from the first satellite for measurement, and also does not need to actually measure the signal from the second satellite, and power consumption and overheads required for obtaining the second strength are further reduced.

In addition, according to the method, the terminal apparatus may determine, based on a strength of a signal of one satellite, a strength of a signal of another satellite in a same orbit. When the terminal apparatus may determine strengths of signals of satellites in a plurality of orbits, the terminal apparatus may select an appropriate satellite from the satellites in the plurality of orbits to perform cell reselection or cell handover. For example, when the first satellite and the second satellite move in an orbit 1, the EIRP of the beam of the first satellite is the same as the EIRP of the beam of the second satellite; and when the third satellite and the fourth satellite move in an orbit 2, EIRP of a beam of the third satellite is the same as EIRP of a beam of the fourth satellite. The terminal apparatus may receive signals from the first satellite and the third satellite. In this way, the terminal apparatus may determine, based on the first strength of the signal that is detected from the first satellite, the second strength of the signal that is expected to be detected from the second satellite, and determine, based on a third strength of the signal that is detected from the third satellite, a fourth strength of the signal that is expected to be detected from the fourth satellite. Then, the terminal apparatus may determine, based on the second strength and the fourth strength, whether to reselect or hand over to the second satellite in the orbit 1 or the fourth satellite in the orbit 2. Optionally, when the second strength is greater than or equal to the fourth strength, the terminal apparatus may reselect or hand over to the second satellite in the orbit 1; or when the second strength is less than the fourth strength, the terminal apparatus may reselect or hand over to the fourth satellite in the orbit 2.

Optionally, the first information in Manner 1 may alternatively include the first time interval or the first indication.

When the first information includes the first time interval, and the first information does not express the association relationship between the first parameter and the second parameter (for example, the first information does not include the first indication), it may be considered by default that the association relationship between the first parameter and the second parameter includes: a first value is less than or equal to a first threshold. In other words, when the first information includes the first time interval, and the first information does not express the association relationship between the first parameter and the second parameter, that the first information may indirectly indicate the association relationship between the first parameter and the second parameter includes: the first value is less than or equal to the first threshold.

For example, in step A2, that the first satellite determines the association relationship between the first parameter and the second parameter includes: the first value is less than or equal to the first threshold, and the first time interval is determined. In S301, the first satellite may send, to the terminal apparatus, the first information including the first time interval. That the terminal apparatus may determine the association relationship between the first parameter and the second parameter after receiving the first information including the first time interval includes: the first value is less than or equal to the first threshold.

For example, a representation form of the first information may be as follows:

```
     {
        Sat-QCL Type1
        {
           CellID #2
           time-interval t1
     }
     
```

CellID #2 is a cell identifier of a cell of the second satellite, and the value t1 of the time-interval parameter is the first time interval. The first information may indicate that a parameter related to coverage of a cell whose cell identifier is 2 and a parameter related to coverage of a cell of the first satellite have the association relationship in Manner 1.

In the method, the association relationship between the first parameter and the second parameter may be indicated by using the first information including the first time interval, and the first information does not need to include the first indication, so that overheads required for transmitting the first information can be reduced.

When the first information includes the first indication, and does not include the first time interval, the first time interval in the association relationship between the first parameter and the second parameter may be a first specified time interval or a first default time interval. For example, in step A2, that the first satellite determines the association relationship between the first parameter and the second parameter includes: the first value is less than or equal to the first threshold, and the first time interval is determined. If the first time interval is the first specified time interval or the first default time interval, in S301, the first satellite may send, to the terminal apparatus, the first information including the first indication. After receiving the first information including the first indication, the terminal apparatus may determine the association relationship between the first parameter and the second parameter based on the first specified time interval or the first default time interval.

For example, a representation form of the first information may be as follows:

```
     {
        Sat-QCL Type1
        {
           CellID #2
           Sat-QCL typeA
     }
     
```

CellID #2 is a cell identifier of a cell of the second satellite, Sat-QCL typeA is the first indication, and the first time interval is the first specified time interval or the first default time interval. The first information may indicate that a parameter related to coverage of a cell whose cell identifier is 2 and a parameter related to coverage of a cell of the first satellite have the association relationship in Manner 1.

In the method, the association relationship between the first parameter and the second parameter may be indicated by using the first information including the first indication, and the first information does not need to include the first time interval, so that overheads required for transmitting the first information can be reduced.

Optionally, in Manner 1, the first information further includes a first offset, and the first offset may indicate an offset between the two strengths.

The first offset may indicate a range of an absolute value of the offset. For example, when a value of the first offset is c1, it indicates that an absolute value of the difference between the two strengths is less than or equal to c1 dB, and c1 is a non-negative number. When the value determined based on the difference between the two strengths may be the absolute value of the difference between the two strengths, and the first offset indicates the range of the absolute value of the offset, the value of the first offset may be the foregoing first threshold.

The first offset may alternatively indicate a range of a relative value of the offset. For example, when a value of the first offset is c1, it indicates that a ratio of the absolute value of the difference between the two strengths to one of the two strengths is less than or equal to c1%.

For example, a representation form of the first information may be as follows:

```
     {
        Sat-QCL Type1
        {
           CellID #2
           Sat-QCL typeA
           time-interval t1
           relaxation c1
        }
     }
```

CellID #2 is a cell identifier of a cell of the second satellite, Sat-QCL typeA is the first indication, the value t1 of the time-interval (time-interval) parameter is the first time interval, and the value c1 of the relaxation (relaxation) parameter is the value of the first offset. The first information may indicate that a parameter related to coverage of a cell whose cell identifier is 2 and a parameter related to coverage of a cell of the first satellite have the association relationship in Manner 1.

In addition, the relaxation parameter is an optional parameter, that is, the first information may not include the first offset. For example, when the expected strengths of the signals sent by the first satellite and the second satellite in the first region are the same, the first information may not include the first offset.

Optionally, when the first information includes the first offset, in step A2, the first satellite may further determine the first offset. The first satellite may determine a range of an offset between the first strength and the second strength based on the EIRP of the beam of the first satellite, a loss from the first satellite to the first region, the EIRP of the beam of the second satellite, and a loss from the second satellite to the first region, to determine the first offset. The loss from the first satellite to the first region and the loss from the second satellite to the first region may be estimated losses or historically measured losses. For example, if the EIRP of the beam of the first satellite is Pₐ, the loss from the first satellite to the first region is ΔPₐ, the EIRP of the beam of the second satellite is P_{b}, and the loss from the second satellite to the first region is ΔP_{b}, the offset between the first strength and the second strength is less than or equal to P_{b}-ΔP_{b}-Pₐ+ΔPₐ. In this case, the value of the first offset may be P_{b}-ΔP_{b}-Pₐ+ΔPₐ.

Optionally, when the first information includes the first offset, S302 may include: The terminal apparatus determines, based on the first time interval, the first strength of the signal that is from the first satellite and that is detected by the terminal apparatus at the first moment, and the first offset, the second strength of the signal that is from the second satellite and that is expected to be detected by the terminal apparatus at the second moment.

For example, the first time interval is ΔT₁, and the first offset indicates that the absolute value of the difference between the two strengths is less than or equal to c1 dB. If the terminal apparatus detects, at the moment T1, that the first strength of the signal from the first satellite is P1, the terminal apparatus may determine that the second strength of the signal that is from the second satellite and that is expected to be detected at the moment T2 falls within a range [P1-c1, P1+c1], where T2=T1+ΔT₁, and [] represents a closed set.

For another example, the first time interval is ΔT₁, and the first offset indicates that the ratio of the absolute value of the difference between the two strengths to one of the two strengths is less than or equal to c1%. If the terminal apparatus detects, at the moment T1, that the first strength of the signal from the first satellite is P1, the terminal apparatus may determine that the second strength of the signal that is from the second satellite and that is expected to be detected at the moment T2 falls within a range [P1(1-c1%), P1(1+c1%)], where T2=T1+ΔT₁.

According to the method, the terminal apparatus may accurately determine, based on the first strength of the signal that is detected from the first satellite and the first offset, the second strength of the signal that is expected to be detected from the second satellite, so that accuracy of predicting the second strength is improved.

Manner 2: The first information includes a second time interval and a second indication. The second time interval is a difference between two moments. That the second indication indicates the association relationship between the first parameter and the second parameter includes: a second value is less than or equal to a second threshold. The second value is a value determined based on a difference between two frequency offsets. The two frequency offsets include: a frequency offset of the signal that is from the first satellite and that is detected by the communication apparatus located in a second region at one of the two moments, and a frequency offset of the signal that is from the second satellite and that is expected to be detected by the communication apparatus located in the second region at the other of the two moments.

Optionally, the second value may be an absolute value of the difference between the two frequency offsets, or may be a value in a proportional relationship with the difference between the two frequency offsets, or may be a value obtained by performing normalization processing on the difference between the two frequency offsets.

In addition, the second indication may be specified indication information, for example, may be represented as an inter-satellite quasi-colocation type B (Sat-QCL typeB). The second region is one region in the coverage area of the first satellite. For example, at one of the two moments, the first region is one region in the coverage area of the first satellite. The second threshold may be preset, or may be determined by the first satellite, or may be obtained by the first satellite from another communication apparatus. This is not limited in this application.

For example, a representation form of the first information may be as follows:

```
     {
        Sat-QCL Type1
        {
           CellID #2
           Sat-QCL typeB
           time-interval t2
     }
```

CellID #2 is a cell identifier of a cell of the second satellite, Sat-QCL typeB is the second indication, and the value t2 of the time-interval parameter is the second time interval. The first information may indicate that a parameter related to coverage of a cell whose cell identifier is 2 and a parameter related to coverage of a cell of the first satellite have the association relationship in Manner 2.

According to the method, the first information received by the terminal apparatus includes the second time interval and the second indication. The terminal apparatus may determine, based on the second time interval and the second indication, an association relationship between a first frequency offset of the signal that is detected from the first satellite and a second frequency offset of the signal that is expected to be detected from the second satellite. In this way, the terminal apparatus can determine the second frequency offset based on the first frequency offset and the first information, without obtaining, from the first satellite, parameters, for example, the ephemeris and a frequency compensation configuration of the second satellite, that are used to determine the second frequency offset, so that power consumption and overheads required for obtaining the parameter of the second satellite from the first satellite can be reduced.

Optionally, in step A2, the first satellite may determine, based on the ephemeris of the first satellite, the ephemeris of the second satellite, the coverage area of the beam of the first satellite, and the coverage area of the beam of the second satellite, that the first parameter and the second parameter have the association relationship in Manner 2, and determine the first information based on the association relationship.

Frequency offsets of signals of different satellites that cross the top in a same orbit are close. Therefore, step A2 may include: The first satellite may determine the moving orbit of the first satellite based on the ephemeris of the first satellite, and determine the moving orbit of the second satellite based on the ephemeris of the second satellite, to determine whether the first satellite and the second satellite move in a same orbit. The first satellite may further determine, based on the coverage area of the beam of the first satellite and the coverage area of the beam of the second satellite, whether the first satellite and the second satellite can cover a same region (for example, the second region). If the first satellite and the second satellite move in the same orbit, and the first satellite and the second satellite may cover the second region, the first satellite may determine that the first parameter and the second parameter have the association relationship in Manner 2, to determine that the first information includes the second indication.

Optionally, the first satellite may further determine the second time interval based on the ephemeris of the first satellite and the ephemeris of the second satellite. For example, the first satellite determines, based on the ephemeris of the first satellite and the ephemeris of the second satellite, that the first satellite and the second satellite move in the same orbit; and for any location in the orbit, the first satellite arrives ΔTₐ earlier than the second satellite, and therefore the first satellite may determine that the second time interval is ΔTₐ.

Optionally, in Manner 2, the first parameter may include the first frequency offset of the signal that is of the first satellite and that is detected by the terminal apparatus at a third moment. In this case, S302 may include: The terminal apparatus determines, based on the second time interval and the first frequency offset, the second frequency offset of the signal that is from the second satellite and that is expected to be detected by the terminal apparatus at a fourth moment, where a difference between the fourth moment and the third moment is the second time interval. The second time interval may be the same as or different from the first time interval. This is not limited in this application.

For example, the second time interval is ΔT₂. If the terminal apparatus detects, at a moment T3, that the first frequency offset of the signal of the first satellite is S1, the terminal apparatus may determine that the second frequency offset of the signal that is from the second satellite and that is expected to be detected at a moment T4 is approximately S1, where T4=T3+ΔT₂.

According to the method, the terminal apparatus may determine, based on the first frequency offset of the signal that is detected from the first satellite and the first information, the second frequency offset of the signal that is expected to be detected from the second satellite, so that the terminal apparatus does not need to obtain, from the first satellite, parameters, for example, the ephemeris and a frequency compensation configuration of the second satellite, that are used to determine the second frequency offset, and complexity of downlink synchronization of the terminal apparatus can be further reduced. In addition, according to the method, the terminal apparatus does not need to search for the signal from the second satellite in frequency domain and angle domain, so that a quantity of times of blind detection can be reduced, search overheads in frequency domain and angle domain can be reduced when the signal from the second satellite is received, and energy consumption required for receiving the signal that is detected from the second satellite can be reduced.

Optionally, the first information in Manner 2 may alternatively include the second time interval or the second indication.

When the first information includes the second time interval, and the first information does not express the association relationship between the first parameter and the second parameter (for example, the first information does not include the second indication), it may be considered by default that the association relationship between the first parameter and the second parameter includes: a second value is less than or equal to a second threshold. In other words, when the first information includes the second time interval, and the first information does not express the association relationship between the first parameter and the second parameter, that the first information may indirectly indicate the association relationship between the first parameter and the second parameter includes: the second value is less than or equal to the second threshold.

For example, in step A2, that the first satellite determines the association relationship between the first parameter and the second parameter includes: the second value is less than or equal to the second threshold, and the second time interval is determined. In S301, the first satellite may send, to the terminal apparatus, the first information including the second time interval. That the terminal apparatus may determine the association relationship between the first parameter and the second parameter after receiving the first information including the second time interval includes: the second value is less than or equal to the second threshold.

For example, a representation form of the first information may be as follows:

```
     {
        Sat-QCL Type1
        {
           CellID #2
           time-interval t2
     }
```

CellID #2 is a cell identifier of a cell of the second satellite, and the value t2 of the time-interval parameter is the second time interval. The first information may indicate that a parameter related to coverage of a cell whose cell identifier is 2 and a parameter related to coverage of a cell of the first satellite have the association relationship in Manner 2.

In the method, the association relationship between the first parameter and the second parameter may be indicated by using the first information including the second time interval, and the first information does not need to include the second indication, so that overheads required for transmitting the first information can be reduced.

When the first information includes the second indication, and does not include the second time interval, the second time interval in the association relationship between the first parameter and the second parameter may be a second specified time interval or a second default time interval. For example, in step A2, that the first satellite determines the association relationship between the first parameter and the second parameter includes: the second value is less than or equal to the second threshold, and the second time interval is determined. If the determined second time interval is the second specified time interval or the second default time interval, in S301, the first satellite may send, to the terminal apparatus, the first information including the second indication. After receiving the first information including the second indication, the terminal apparatus may determine the association relationship between the first parameter and the second parameter based on the second specified time interval or the second default time interval.

For example, a representation form of the first information may be as follows:

```
     {
        Sat-QCL Type1
        {
           CellID #2
            Sat-QCL typeB
     }
```

CellID #2 is a cell identifier of a cell of the second satellite, Sat-QCL typeB is the second indication, and the second time interval is the second specified time interval or the second default time interval. The first information may indicate that a parameter related to coverage of a cell whose cell identifier is 2 and a parameter related to coverage of a cell of the first satellite have the association relationship in Manner 2.

In the method, the association relationship between the first parameter and the second parameter may be indicated by using the first information including the second indication, and the first information does not need to include the second time interval, so that overheads required for transmitting the first information can be reduced.

Optionally, in Manner 2, the first information further includes a second offset, and the second offset may indicate an offset between the two frequency offsets.

The second offset may indicate a range of an absolute value of the offset. For example, when a value of the second offset is c2, it indicates that an absolute value of the difference between the two frequency offsets is less than or equal to c2, where c2 is a non-negative number. When the value determined based on the difference between the two frequency offsets may be the absolute value of the difference between the two frequency offsets, and the second offset indicates the range of the absolute value of the offset, the value of the second offset may be the foregoing second threshold.

The second offset may alternatively indicate a range of a relative value of the offset. For example, when a value of the second offset is c2, it indicates that a ratio of the absolute value of the difference between the two frequency offsets to one of the two frequency offsets is less than or equal to c2%.

For example, a representation form of the first information may be as follows:

```
     {
        Sat-QCL Type1
        {
           CellID #2
            Sat-QCL typeB
           time-interval t2
           relaxation c2
     }
```

CellID #2 is a cell identifier of a cell of the second satellite, Sat-QCL typeB is the second indication, the value t2 of the time-interval parameter is the second time interval, and the value c2 of the relaxation parameter is the value of the second offset. The first information may indicate that a parameter related to coverage of a cell whose cell identifier is 2 and a parameter related to coverage of a cell of the first satellite have the association relationship in Manner 2.

In addition, the relaxation parameter is an optional parameter, that is, the first information may not include the relaxation parameter. For example, when the expected frequency offsets of the signals sent by the first satellite and the second satellite in the second region are the same, the first information may not include the relaxation parameter.

Optionally, when the first information includes the second offset, in step A2, the first satellite may further determine the second offset. The first satellite may determine a range of an offset between the first frequency offset and the second frequency offset based on a first angle and a second angle. The first angle is an angle of an included angle between a first connection line and a movement direction of the first satellite when the first satellite covers a second range, the first connection line is a connection line between the first satellite and a first point in the second range, and the first point is one point in the second range (for example, a central point of the second range). The second angle is an angle of an included angle between a second connection line and a movement direction of the second satellite when the second satellite covers the second range, the second connection line is a connection line between the second satellite and a second point in the second range, and the second point is one point in the second range (for example, a central point of the second range). The second point may be the same as the first point. For example, if the first angle is R1, and the second angle is R2, the range of the offset between the first frequency offset and the second frequency offset is less than or equal to a frequency offset corresponding to an angle (R2-R1).

In step A2, the first satellite may determine, based on the ephemeris of the first satellite and the coverage area of the beam of the first satellite, the first connection line and the movement direction of the first satellite when the first satellite covers the second range. The first satellite may determine, based on the ephemeris of the second satellite and the coverage area of the beam of the second satellite, the second connection line and the movement direction of the second satellite when the second satellite covers the second range.

Optionally, when the first information includes the second offset, S302 may include: The terminal apparatus determines, based on the second time interval, and the first frequency offset and the second offset of the signal that is of the first satellite and that is detected by the terminal apparatus at the third moment, the second frequency offset of the signal that is from the second satellite and that is expected to be detected by the terminal apparatus at the fourth moment.

For example (where the example is referred to as Example 2 below), the second time interval is ΔT₂, and the second offset indicates that the absolute value of the difference between the two frequency offsets is less than or equal to c2. If the terminal apparatus detects, at the moment T3, that the first frequency offset of the signal of the first satellite is S1, the terminal apparatus may determine that the second frequency offset of the signal that is of the second satellite and that is expected to be detected at the moment T4 falls within a range [S1-c2, S1+c2], where T4=T3+ΔT₂.

For another example (where the example is referred to as Example 3 below), the second time interval is ΔT₂, and the second offset indicates that the ratio of the absolute value of the difference between the two frequency offsets to the first frequency offset is less than or equal to c2%. If the terminal apparatus detects, at the moment T3, that the first frequency offset of the signal of the first satellite is S1, the terminal apparatus may determine that the second frequency offset of the signal that is of the second satellite and that is expected to be detected at the moment T4 falls within a range [S1(1-c2%), S1(1+c2%)], where T4=T3+ΔT₂.

Optionally, after S302, the terminal apparatus may receive, by using the second frequency offset, the signal that is detected from the second satellite. For example, in Example 2 above, the terminal apparatus may detect the signal from the second satellite at the moment T4 in the frequency offset range [S1-c2, S1+c2]. For another example, in Example 3 above, the terminal apparatus may detect the signal from the second satellite at the moment T4 in the frequency offset range [S1(1-c2%), S1(1+c2%)].

According to the method, the terminal apparatus may accurately determine, based on the first frequency offset and the second offset of the signal that is detected from the first satellite, the second frequency offset of the signal that is expected to be detected from the second satellite, so that accuracy of predicting the second frequency offset is improved.

Manner 3: The first information includes a third time interval and a third indication.

The third time interval is related to two time periods. The two time periods may include a time period in which the first satellite covers a third region (which may be a time period 1 below for short), and a time period in which the second satellite covers the third region (which may be a time period 2 below for short). The third region may be one region in the coverage area of the first satellite. For example, the third region is one region in the coverage area of the first satellite in the time period 1. For example (where the example is referred to as Example 1 below), the time period 1 is [a, b], to be specific, the first satellite covers the third region at a moment a to a moment b; and the time period 2 may be [d, e], to be specific, the second satellite covers the third region at a moment d to a moment e.

Optionally, the third time interval is at least one of the following:
1. a difference between expected start time of the two time periods, for example, a difference between start time of the time period 2 and start time of the time period 1, where in Example 1, the third time interval may be d-a;
2. a difference between expected end time of the two time periods, for example, a difference between end time of the time period 2 and end time of the time period 1, where in Example 1, the third time interval may be e-b; and
3. a difference between expected end time of one of the two time periods and expected start time of the other of the two time periods, for example, a difference between start time of the time period 2 and end time of the time period 1, where in this case, in Example 1, the third time interval may be d-b; and for another example, a difference between end time of the time period 2 and start time of the time period 1, where in this case, in Example 1, the third time interval may be e-a.

That the third indication may indicate the association relationship between the first parameter and the second parameter includes: a third value is less than or equal to a third threshold. The third value is a value determined based on a difference between first duration and second duration, the first duration is duration of the time period (namely, the time period 1) in which the first satellite covers the third region, and the second duration is duration of the time period (namely, the time period 2) in which the second satellite covers the third region.

Optionally, the third value may be an absolute value of the difference between the first duration and the second duration, or may be a value in a proportional relationship with the difference between the first duration and the second duration, or may be a value obtained by performing normalization processing on the difference between the first duration and the second duration.

In addition, the third indication may be specified indication information, for example, may be represented as an inter-satellite quasi-colocation type C (Sat-QCL typeC). The third threshold may be preset, or may be determined by the first satellite, or may be obtained by the first satellite from another communication apparatus. This is not limited in this application.

For example, a representation form of the first information may be as follows:

```
     {
        Sat-QCL Type1
        {
           CellID #2
            Sat-QCL typeC
           time-interval t3
     }
```

CellID #2 is a cell identifier of a cell of the second satellite, Sat-QCL typeC is the third indication, and the value t3 of the time-interval parameter is the third time interval. The first information may indicate that a parameter related to coverage of a cell whose cell identifier is 2 and a parameter related to coverage of a cell of the first satellite have the association relationship in Manner 3.

According to the method, the first information received by the terminal apparatus may include the third time interval and the third indication. The terminal apparatus may determine, based on the third time interval and the third indication, an association relationship between the first time period in which the signal is detected from the first satellite and the second time period in which the signal is expected to be capable of being detected from the second satellite. In this way, the terminal apparatus can determine the second time period based on the first time period and the first information without obtaining a coverage parameter of the second satellite from the first satellite, so that overheads and power consumption for obtaining the coverage parameter of the second satellite can be reduced.

Optionally, in step A2, the first satellite may determine, based on the ephemeris of the first satellite, the ephemeris of the second satellite, the coverage area of the beam of the first satellite, and the coverage area of the beam of the second satellite, that the first parameter and the second parameter have the association relationship in Manner 3, and determine the first information.

For example, the first satellite may determine the moving orbit of the first satellite based on the ephemeris of the first satellite, and determine the orbit of the second satellite based on the ephemeris of the second satellite, to determine whether the first satellite and the second satellite move in a same orbit. The first satellite may further determine, based on the coverage area of the beam of the first satellite and the coverage area of the beam of the second satellite, whether the first satellite and the second satellite use a same beam topology to cover a same region (for example, the third region). If the first satellite and the second satellite move in the same orbit, and the first satellite and the second satellite use a same beam topology to cover the second region, the first satellite may determine that the first parameter and the second parameter have the association relationship in Manner 3, to determine that the first information includes the third indication.

Optionally, the first satellite may further determine the third time interval based on the ephemeris of the first satellite and the ephemeris of the second satellite. For example, the first satellite may determine, based on the ephemeris of the first satellite and the ephemeris of the second satellite, that the first satellite and the second satellite move in the same orbit; and for any location in the orbit, the first satellite arrives ΔTₐ earlier than the second satellite, and therefore the first satellite may determine that the third time interval is ΔTₐ.

Optionally, in Manner 3, the first parameter may include the first time period in which the terminal apparatus detects the signal from the first satellite. In this case, S302 may include: The terminal apparatus determines, based on the third time interval and the first time period, the second time period in which the terminal apparatus is expected to be capable of detecting the signal from the second satellite.

For example, the third time interval is a difference between expected start time of the two time periods and a difference between expected end time of the two time periods, and the third time interval is ΔT₃. If the first time period in which the terminal apparatus detects the signal from the first satellite is [a1, b1], the terminal apparatus determines that the second time period in which the terminal apparatus is expected to be capable of detecting the signal from the second satellite is [a1+ΔT₃, b1+ΔT₃].

For another example, the third time interval is a difference between expected start time of a later time period and expected end time of a previous time period in the two time periods, and the third time interval is ΔT₃. If the first time period in which the terminal apparatus detects the signal from the first satellite is [a1, b1], the terminal apparatus determines that the second time period in which the terminal apparatus is expected to be capable of detecting the signal from the second satellite is [b1+ΔT₃, b1+ΔT₃+b1-a1].

For another example, the third time interval is a difference between expected end time of a later time period and expected start time of a previous time period in the two time periods, and the third time interval is ΔT₃. If the first time period in which the terminal apparatus detects the signal from the first satellite is [a1, b1], the terminal apparatus determines that the second time period in which the terminal apparatus is expected to be capable of detecting the signal from the second satellite is [a1+ΔT₃-b1+a1, a1+ΔT₃].

According to the method, the terminal apparatus may determine the first time period in which the signal is detected from the first satellite, and determine, based on the third time interval indicated by the first information, the second time period in which the terminal apparatus is expected to be capable of detecting the signal from the second satellite. In this way, the terminal apparatus can determine, without obtaining a coverage parameter of the second satellite from the first satellite, the second time period in which the signal can be detected from the second satellite, so that overheads and power consumption for obtaining the coverage parameter of the second satellite can be reduced.

Optionally, the first information in Manner 3 may alternatively include the third time interval or the third indication.

When the first information includes the third time interval, and the first information does not express the association relationship between the first parameter and the second parameter (for example, the first information does not include the third indication), it may be considered by default that the association relationship between the first parameter and the second parameter includes: a third value is less than or equal to a third threshold. In other words, when the first information includes the third time interval, and the first information does not express the association relationship between the first parameter and the second parameter, that the first information may indirectly indicate the association relationship between the first parameter and the second parameter includes: the third value is less than or equal to the third threshold.

For example, in step A2, that the first satellite determines the association relationship between the first parameter and the second parameter includes: the third value is less than or equal to the third threshold, and the third time interval is determined. In S301, the first satellite may send, to the terminal apparatus, the first information including the third time interval. That the terminal apparatus may determine the association relationship between the first parameter and the second parameter after receiving the first information including the third time interval includes: the third value is less than or equal to the third threshold.

For example, a representation form of the first information may be as follows:

```
     {
        Sat-QCL Type1
        {
           CellID #2
           time-interval t3
     }
```

CellID #2 is a cell identifier of a cell of the second satellite, and the value t3 of the time-interval parameter is the third time interval. The first information may indicate that a parameter related to coverage of a cell whose cell identifier is 2 and a parameter related to coverage of a cell of the first satellite have the association relationship in Manner 3.

In the method, the association relationship between the first parameter and the second parameter may be indicated by using the first information including the third time interval, and the first information does not need to include the third indication, so that overheads required for transmitting the first information can be reduced.

When the first information includes the third indication, and does not include the third time interval, the third time interval in the association relationship between the first parameter and the second parameter may be a third specified time interval or a third default time interval. For example, in step A2, that the first satellite determines the association relationship between the first parameter and the second parameter includes: the third value is less than or equal to the third threshold, and the third time interval is determined. If the determined third time interval is the third specified time interval or the third default time interval, in S301, the first satellite may send, to the terminal apparatus, the first information including the third indication. After receiving the first information including the third indication, the terminal apparatus may determine the association relationship between the first parameter and the second parameter based on the third specified time interval or the third default time interval.

For example, a representation form of the first information may be as follows:

```
     {
        Sat-QCL Type1
        {
           CellID #2
            Sat-QCL typeC
     }
```

CellID #2 is a cell identifier of a cell of the second satellite, Sat-QCL typeC is the third indication, and the third time interval is the third specified time interval or the third default time interval. The first information may indicate that a parameter related to coverage of a cell whose cell identifier is 2 and a parameter related to coverage of a cell of the first satellite have the association relationship in Manner 3.

**In** the method, the association relationship between the first parameter and the second parameter may be indicated by using the first information including the third indication, and the first information does not need to include the third time interval, so that overheads required for transmitting the first information can be reduced.

Optionally, in Manner 3, the first information may further include a third offset, and the third offset indicates an offset of the second duration relative to the first duration.

The third offset may indicate a range of an absolute value of the offset. For example, when a value of the third offset is c3, it indicates that the absolute value of the offset of the second duration relative to the first duration is less than or equal to c3 seconds, and c3 is a non-negative number. When the third value is an absolute value of a difference between the first duration and the second duration, and the third offset indicates the range of the absolute value of the offset, the value of the third offset may be the foregoing third threshold.

The third offset may alternatively indicate a range of a relative value of the offset. For example, when the value of the third offset is c3, it indicates that a ratio of the absolute value of the difference between the second duration and the first duration to the first duration is less than or equal to c3%.

For example, a representation form of the first information may be as follows:

```
     {
        Sat-QCL Type1
        {
           CellID #2
            Sat-QCL typeC
           time-interval t3
           relaxation c3
     }
```

CellID #2 is a cell identifier of a cell of the second satellite, Sat-QCL typeC is the third indication, the value t3 of the time-interval parameter is the third time interval, and the value c3 of the relaxation parameter is the value of the third offset. The first information may indicate that a parameter related to coverage of a cell whose cell identifier is 2 and a parameter related to coverage of a cell of the first satellite have the association relationship in Manner 3.

In addition, the relaxation parameter is an optional parameter, that is, the first information may not include the relaxation parameter. For example, when the expected duration of the time period in which the first satellite covers the third region and the expected duration of the time period in which the second satellite covers the third region are the same, the first information may not include the relaxation parameter.

Optionally, when the first information includes the third offset, in step A2, the first satellite may further determine the third offset. The first satellite may determine the offset of the second duration relative to the first duration based on the following parameters: the moving track of the first satellite, the coverage area of the beam of the first satellite, the moving track of the second satellite, and the coverage area of the beam of the second satellite, to determine the third offset. For example, the first satellite determines, based on the moving track of the first satellite and the coverage area of the beam of the first satellite, that the first duration of the time period in which the first satellite covers the third region is W1. The first satellite determines, based on the moving track of the second satellite and the coverage area of the beam of the second satellite, that the second duration of the time period in which the second satellite covers the third region is W2. The first satellite may determine that the offset of the second duration relative to the first duration is less than or equal to an absolute value of W2-W1, and determine that the value of the third offset is the absolute value of W2-W1.

Optionally, when the first information includes the third offset, S302 may include: The terminal apparatus may determine, based on the third time interval, the third offset, and the first time period in which the terminal apparatus detects the signal from the first satellite, the second time period in which the terminal apparatus is expected to be capable of detecting the signal from the second satellite.

For example (where the example is referred to as Example 4 below), the third time interval is a difference between expected start time of the two time periods and/or a difference between expected end time of the two time periods, the third time interval is ΔT₃, and the third offset indicates that the absolute value of the offset of the third time interval is less than or equal to c3 seconds. If the first time period in which the terminal apparatus detects the signal from the first satellite is [a1, b1], the terminal apparatus determines that the second time period in which the terminal apparatus is expected to be capable of detecting the signal from the second satellite is [a1+ΔT₃-c3, b1+ΔT₃+c3].

For another example (where the example is referred to as Example 5 below), the third time interval is a difference between expected start time of the two time periods, the third time interval is ΔT₃, and the third offset indicates that the ratio of the absolute value of the difference between the second duration and the first duration to the first duration is less than or equal to c3%. If the first time period in which the terminal apparatus detects the signal from the first satellite is [a1, b1], the terminal apparatus determines that the second time period in which the terminal apparatus is expected to be capable of detecting the signal from the second satellite is [(a1+ΔT₃-(b1-a1)(1+c3%)), (b1+ΔT₃)+(b1-a1)(1+c3%)].

Optionally, after S302, the terminal apparatus may detect the signal from the second satellite in the second time period. For example, in Example 4, the terminal apparatus may detect the signal from the second satellite in [a1+ΔT₃-c3, b1+ΔT₃+c3]. For another example, in Example 5, the terminal apparatus may detect the signal from the second satellite in [(a1+ΔT₃-(b1-a1)(1+c3%)), (b1+ΔT₃)+(b1-a1)(1+c3%)].

According to the method, the terminal apparatus may determine the first time period in which the signal is detected from the first satellite, the third time interval, and the third offset, and accurately determine the second time period in which the terminal apparatus is expected to be capable of detecting the signal from the second satellite, so that accuracy of predicting the second time period is improved.

Optionally, Manner 1 to Manner 3 may be used separately, or may be used in combination.

Optionally, in this application, the association relationship between the first parameter and the second parameter may be transferred. The following uses an example in which the association relationship is the association relationship in Manner 1 for description.

If the parameter related to the coverage of the satellite 2 and the parameter related to the coverage of the satellite 1 have the association relationship in Manner 1, and the parameter related to the coverage of the satellite 3 and the parameter related to the coverage of the satellite 2 have the association relationship in Manner 1, the parameter related to the coverage of the satellite 3 and the parameter related to the coverage of the satellite 1 have the association relationship in Manner 1. In this case, the time-interval parameter and/or the relaxation parameter may be extended.

For example, if the value of the time-interval parameter in the association relationship between the parameter related to the coverage of the satellite 2 and the parameter related to the coverage of the satellite 1 in Manner 1 is t1, the value of the time-interval parameter in the association relationship between the parameter related to the coverage of the satellite 3 and the parameter related to the coverage of the satellite 1 in Manner 1 may be 2*t1.

For another example, if the value of the relaxation parameter in the association relationship between the parameter related to the coverage of the satellite 2 and the parameter related to the coverage of the satellite 1 in Manner 1 is c1, and c1 indicates the absolute value of the offset, the value of the time-interval parameter in the association relationship between the parameter related to the coverage of the satellite 3 and the parameter related to the coverage of the satellite 1 in Manner 1 may be 2*c1.

For another example, if the value of the relaxation parameter in the association relationship between the parameter related to the coverage of the satellite 2 and the parameter related to the coverage of the satellite 1 in Manner 1 is c1, and c1 indicates the relative value of the offset, the value of the time-interval parameter in the association relationship between the parameter related to the coverage of the satellite 3 and the parameter related to the coverage of the satellite 1 in Manner 1 may be (c1%)².

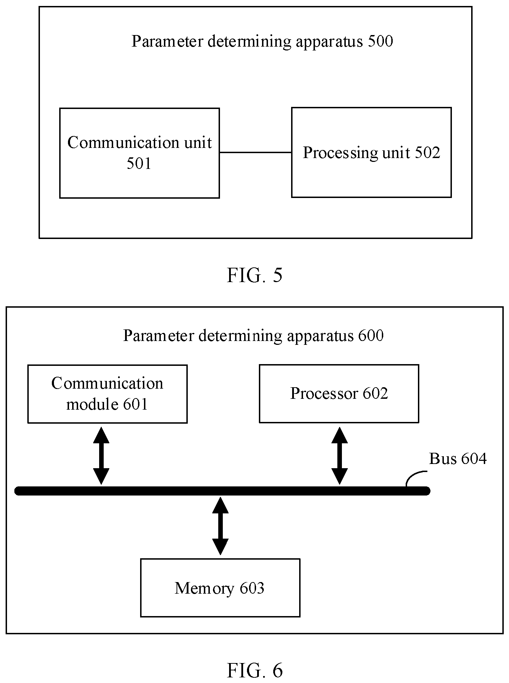

Based on a same technical concept as the method embodiment in FIG. 3, an embodiment of this application provides a parameter determining apparatus in FIG. 5, and the parameter determining apparatus may be configured to perform functions of related steps in the foregoing method embodiments. The function may be implemented by hardware, or may be implemented by software or by hardware executing corresponding software. The hardware or the software includes one or more modules corresponding to the foregoing function. A structure of the parameter determining apparatus is shown in FIG. 5, and includes a communication unit 501 and a processing unit 502. The parameter determining apparatus 500 may be used in the terminal apparatus in the communication system shown in FIG. 2A or FIG. 2B, and may implement the parameter determining method provided in the foregoing embodiments and examples of this application. The following describes functions of the units in the parameter determining apparatus 500.

The communication unit 501 is configured to receive and send data.

When the parameter determining apparatus 500 is used in the terminal apparatus, the communication unit 501 may be implemented through a transceiver, for example, a mobile communication module. The mobile communication module may include at least one antenna, at least one filter, a switch, a power amplifier, a low noise amplifier (low noise amplifier, LNA), and the like.

The processing unit 502 may be configured to support the parameter determining apparatus 500 to perform the processing actions in the foregoing method embodiments. The processing unit 502 may be implemented by a processor. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the parameter determining apparatus 500 is used in the terminal apparatus in the embodiment of this application shown in FIG. 3. The following describes specific functions of the processing unit 502 in this implementation.

The processing unit 502 is configured to: receive first information through the communication unit 501, where the first information indicates an association relationship between a first parameter and a second parameter; the first parameter is a parameter related to coverage of a first satellite, and the second parameter is a parameter related to coverage of a second satellite; and the first satellite is a satellite that provides a service for the terminal apparatus, and the second satellite is a satellite that is to provide a service for the terminal apparatus; and determine the second parameter based on the first information and the first parameter.

Optionally, the first parameter includes at least one of the following parameters: an ephemeris of the first satellite, a moving track of the first satellite, a coverage area of each beam of the first satellite at a specified moment, a time period in which each beam of the first satellite covers each coverage area, and a parameter obtained by a communication apparatus by measuring a signal of the first satellite in a coverage area of the first satellite; and the second parameter includes at least one of the following parameters: an ephemeris of the second satellite, a moving track of the second satellite, a coverage area of each beam of the second satellite at a specified moment, a time period in which each beam of the second satellite covers each coverage area, and a parameter expected to be obtained by the communication apparatus by measuring a signal of the second satellite in a coverage area of the second satellite.

Optionally, the first information includes a first time interval and a first indication; the first time interval is a difference between two moments; and that the first indication indicates the association relationship includes: a first value is less than or equal to a first threshold; the first value is a value determined based on a difference between two strengths; the two strengths include: a strength of the signal that is from the first satellite and that is detected by the communication apparatus located in a first region at one of the two moments, and a strength of the signal that is from the second satellite and that is expected to be detected by the communication apparatus located in the first region at the other of the two moments; and the first region is one region in the coverage area of the first satellite.

Optionally, the first parameter includes a first strength of the signal that is from the first satellite and that is detected by the terminal apparatus at a first moment, and the processing unit 502 is specifically configured to: determine, based on the first time interval and the first strength, a second strength of the signal that is from the second satellite and that is expected to be detected by the terminal apparatus at a second moment, where a difference between the second moment and the first moment is the first time interval.

Optionally, the first information further includes a first offset, and the first offset indicates an offset between the two strengths; and the processing unit 502 is specifically configured to determine the second strength based on the first time interval, the first strength, and the first offset.

Optionally, the first information includes the second time interval and a second indication; the second time interval is a difference between two moments; and that the second indication indicates the association relationship includes: a second value is less than or equal to a second threshold; the second value is a value determined based on a difference between two frequency offsets; the two frequency offsets include: a frequency offset of the signal that is from the first satellite and that is detected by the communication apparatus located in a second region at one of the two moments, and a frequency offset of the signal that is from the second satellite and that is expected to be detected by the communication apparatus located in the second region at the other of the two moments; and the second region is one region in the coverage area of the first satellite.

Optionally, the first parameter includes a first frequency offset of the signal of the first satellite that is detected by the terminal apparatus at a third moment, and the processing unit 502 is specifically configured to: determine, based on the second time interval and the first frequency offset, a second frequency offset of the signal that is from the second satellite and that is detected by the terminal apparatus at a fourth moment, where a difference between the fourth moment and the third moment is the second time interval.

Optionally, the first information further includes a second offset, and the second offset indicates an offset between the two frequency offsets; and the processing unit 502 is specifically configured to determine the second frequency offset based on the second time interval, the first frequency offset, and the second offset.

Optionally, the first information includes a third time interval and a third indication; the third time interval is at least one of the following: a difference between expected start time of two time periods, a difference between expected end time of the two time periods, and a difference between expected end time of one of the two time periods and expected start time of the other of the two time periods; the two time periods include a time period in which the first satellite covers a third region and a time period in which the second satellite covers the third region, and the third region is one region in the coverage area of the first satellite; and that the third indication indicates the association relationship includes: a third value is less than or equal to a third threshold, the third value is a value determined based on a difference between first duration and second duration, the first duration is duration of the time period in which the first satellite covers the third region, and the second duration is duration of the time period in which the second satellite covers the third region.

Optionally, the first parameter includes a first time period in which the terminal apparatus detects the signal from the first satellite, and the processing unit 502 is specifically configured to determine, based on the third time interval and the first time period, a second time period in which the terminal apparatus is expected to be capable of detecting the signal from the second satellite.

Optionally, the first information further includes a third offset, and the third offset indicates an offset of the second duration relative to the first duration; and the processing unit 502 is specifically configured to determine the second time period based on the third time interval, the third offset, and the first time period.

It should be noted that, in the foregoing embodiments of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a parameter determining apparatus shown in FIG. 6, and the parameter determining apparatus may be configured to perform related steps in the foregoing method embodiments. The parameter determining apparatus may be used in the terminal apparatus in the communication system shown in FIG. 2A or FIG. 2B, may implement the parameter determining method provided in the foregoing embodiments and examples of this application, and has functions of the parameter determining apparatus shown in FIG. 5. Refer to FIG. 6. The parameter determining apparatus 600 includes a communication module 601, a processor 602, and a memory 603. The communication module 601, the processor 602, and the memory 603 are connected to each other.

Optionally, the communication module 601, the processor 602, and the memory 603 are connected to each other through a bus 604. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 6, but this does not mean that there is only one bus or only one type of bus.

The communication module 601 is configured to receive and send data, to implement communication and interaction with another device. For example, the communication module 601 may be implemented through a physical interface, a communication module, a communication interface, or an input/output interface.

The processor 602 may be configured to support the parameter determining apparatus 600 to perform the processing actions in the foregoing method embodiments. When the parameter determining apparatus 600 is configured to implement the foregoing method embodiments, the processor 602 may be further configured to implement a function of the foregoing processing unit 502. The processor 602 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the parameter determining apparatus 600 is used in the terminal apparatus in the embodiment of this application shown in FIG. 3. The processor 602 is specifically configured to: receive first information through the communication module 601, where the first information indicates an association relationship between a first parameter and a second parameter; the first parameter is a parameter related to coverage of a first satellite, and the second parameter is a parameter related to coverage of a second satellite; and the first satellite is a satellite that provides a service for the terminal apparatus, and the second satellite is a satellite that is to provide a service for the terminal apparatus; and determine the second parameter based on the first information and the first parameter.

For a specific function of the processor 602, refer to the descriptions of the parameter determining method provided in the foregoing embodiments and examples of this application and specific function descriptions of the parameter determining apparatus 500 in the embodiment of this application shown in FIG. 5. Details are not described herein again.

The memory 603 is configured to store program instructions, data, and the like. Specifically, the program instructions may include program code, and the program code includes computer operation instructions. The memory 603 may include a RAM, or may further include a non-volatile memory (non-volatile memory), for example, at least one magnetic disk memory. The processor 602 executes the program instructions stored in the memory 603, and implements the foregoing functions by using the data stored in the memory 603, to implement the parameter determining method provided in the foregoing embodiments of this application.

It may be understood that the memory 603 in FIG. 6 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the method provided in the foregoing embodiments is implemented.

Based on the foregoing embodiments, an embodiment of this application further provides a computer-readable storage medium. The computer-readable storage medium stores a computer program. When the computer program is executed by a computer, the method provided in the foregoing embodiments is implemented.

The storage medium may be any usable medium that can be accessed by the computer. By way of an example but not limitative descriptions, the computer-readable medium may include a RAM, a ROM, an EEPROM, a CD-ROM or another optical disk storage, a magnetic disk storage medium or another magnetic storage device, or any other medium that can carry or store expected program code in a form of instructions or a data structure and that can be accessed by the computer.

Based on the foregoing embodiments, an embodiment of this application further provides a chip. The chip is configured to read a computer program stored in a memory, so that the method provided in the foregoing embodiments is implemented.

Based on the foregoing embodiments, an embodiment of this application provides a chip system. The chip system includes a processor configured to support a computer apparatus to implement functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a parameter determining method and apparatus. In the method, after receiving first information, a terminal apparatus in a satellite communication system may determine a second parameter based on the first information and a first parameter. The first information may indicate an association relationship between the first parameter and the second parameter. The first parameter is a parameter related to coverage of a first satellite, and the second parameter is a parameter related to coverage of a second satellite. The first satellite is a satellite that provides a service for the terminal apparatus, and the second satellite is a satellite that is to provide a service for the terminal apparatus. According to the method, after receiving the first information indicating the association relationship between the first parameter and the second parameter, the terminal apparatus can determine the second parameter based on the first parameter, so that there is no need to obtain the second parameter from the first satellite or determine the second parameter by actually measuring a signal of the second satellite, and energy consumption required for obtaining the second parameter can be further reduced.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. **In** this way, this application is intended to cover these modifications and variations of this application provided that they fall within the scope of protection defined by the following claims and their equivalent technologies.

## Claims

1. A parameter determining method, applied to a terminal apparatus in a satellite communication system, and comprising:
receiving first information, wherein the first information indicates an association relationship between a first parameter and a second parameter; the first parameter is a parameter related to coverage of a first satellite, and the second parameter is a parameter related to coverage of a second satellite; and the first satellite is a satellite that provides a service for the terminal apparatus, and the second satellite is a satellite that is to provide a service for the terminal apparatus; and
determining the second parameter based on the first information and the first parameter.

2. The method according to claim 1, wherein
the first parameter comprises at least one of the following parameters: an ephemeris of the first satellite, a moving track of the first satellite, a coverage area of each beam of the first satellite at a specified moment, a time period in which each beam of the first satellite covers each coverage area, and a parameter obtained by a communication apparatus by measuring a signal of the first satellite in a coverage area of the first satellite; and
the second parameter comprises at least one of the following parameters: an ephemeris of the second satellite, a moving track of the second satellite, a coverage area of each beam of the second satellite at a specified moment, a time period in which each beam of the second satellite covers each coverage area, and a parameter expected to be obtained by the communication apparatus by measuring a signal of the second satellite in a coverage area of the second satellite.

3. The method according to claim 1 or 2, wherein
the first information comprises a first time interval and a first indication;
the first time interval is a difference between two moments; and
that the first indication indicates the association relationship comprises: a first value is less than or equal to a first threshold, wherein the first value is a value determined based on a difference between two strengths; the two strengths comprise: a strength of the signal that is from the first satellite and that is detected by the communication apparatus located in a first region at one of the two moments, and a strength of the signal that is from the second satellite and that is expected to be detected by the communication apparatus located in the first region at the other of the two moments; and the first region is one region in the coverage area of the first satellite.

4. The method according to claim 3, wherein the first parameter comprises a first strength of the signal that is from the first satellite and that is detected by the terminal apparatus at a first moment; and
the determining the second parameter based on the first information and the first parameter comprises:
determining, based on the first time interval and the first strength, a second strength of the signal that is from the second satellite and that is expected to be detected by the terminal apparatus at a second moment, wherein a difference between the second moment and the first moment is the first time interval.

5. The method according to claim 4, wherein the first information further comprises a first offset, and the first offset indicates an offset between the two strengths; and
the determining, based on the first time interval and the first strength, a second strength of the signal that is from the second satellite and that is expected to be detected by the terminal apparatus at a second moment comprises:
determining the second strength based on the first time interval, the first strength, and the first offset.

6. The method according to claim 1 or 2, wherein
the first information comprises the second time interval and a second indication;
the second time interval is a difference between two moments; and
that the second indication indicates the association relationship comprises: a second value is less than or equal to a second threshold, wherein the second value is a value determined based on a difference between two frequency offsets; the two frequency offsets comprise: a frequency offset of the signal that is from the first satellite and that is detected by the communication apparatus located in a second region at one of the two moments, and a frequency offset of the signal that is from the second satellite and that is expected to be detected by the communication apparatus located in the second region at the other of the two moments; and the second region is one region in the coverage area of the first satellite.

7. The method according to claim 6, wherein the first parameter comprises a first frequency offset of the signal that is of the first satellite and that is detected by the terminal apparatus at a third moment; and
the determining the second parameter based on the first information and the first parameter comprises:
determining, based on the second time interval and the first frequency offset, a second frequency offset of the signal that is from the second satellite and that is detected by the terminal apparatus at a fourth moment, wherein a difference between the fourth moment and the third moment is the second time interval.

8. The method according to claim 7, wherein the first information further comprises a second offset, and the second offset indicates an offset between the two frequency offsets; and
the determining, based on the second time interval and the first frequency offset, a second frequency offset of the signal that is from the second satellite and that is detected by the terminal apparatus at a fourth moment comprises:
determining the second frequency offset based on the second time interval, the first frequency offset, and the second offset.

9. The method according to claim 1 or 2, wherein
the first information comprises a third time interval and a third indication;
the third time interval is at least one of the following: a difference between expected start time of two time periods, a difference between expected end time of the two time periods, and a difference between expected end time of one of the two time periods and expected start time of the other of the two time periods;
the two time periods comprise a time period in which the first satellite covers a third region and a time period in which the second satellite covers the third region, and the third region is one region in the coverage area of the first satellite; and
that the third indication indicates the association relationship comprises: a third value is less than or equal to a third threshold, wherein the third value is a value determined based on a difference between first duration and second duration, the first duration is duration of the time period in which the first satellite covers the third region, and the second duration is duration of the time period in which the second satellite covers the third region.

10. The method according to claim 9, wherein the first parameter comprises a first time period in which the terminal apparatus detects the signal from the first satellite; and
the determining the second parameter based on the first information and the first parameter comprises:
determining, based on the third time interval and the first time period, a second time period in which the terminal apparatus is expected to be capable of detecting the signal from the second satellite.

11. The method according to claim 10, wherein the first information further comprises a third offset, and the third offset indicates an offset of the second duration relative to the first duration; and
the determining, based on the third time interval and the first time period, a second time period in which the terminal apparatus is expected to be capable of detecting the signal from the second satellite comprises:
determining the second time period based on the third time interval, the third offset, and the first time period.

12. A parameter determining method, applied to a satellite communication system, and comprising:
sending, by a first satellite, first information to a terminal apparatus, wherein the first information indicates an association relationship between a first parameter and a second parameter; the first parameter is a parameter related to coverage of the first satellite, and the second parameter is a parameter related to coverage of a second satellite; and the first satellite is a satellite that provides a service for the terminal apparatus, and the second satellite is a satellite that is to provide a service for the terminal apparatus; and
determining, by the terminal apparatus, the second parameter based on the first information and the first parameter.

13. The method according to claim 12, wherein
the first parameter comprises at least one of the following parameters: an ephemeris of the first satellite, a moving track of the first satellite, a coverage area of each beam of the first satellite at a specified moment, a time period in which each beam of the first satellite covers each coverage area, and a parameter obtained by a communication apparatus by measuring a signal of the first satellite in a coverage area of the first satellite; and
the second parameter comprises at least one of the following parameters: an ephemeris of the second satellite, a moving track of the second satellite, a coverage area of each beam of the second satellite at a specified moment, a time period in which each beam of the second satellite covers each coverage area, and a parameter expected to be obtained by the communication apparatus by measuring a signal of the second satellite in a coverage area of the second satellite.

14. The method according to claim 12 or 13, wherein
the first information comprises a first time interval and a first indication;
the first time interval is a difference between two moments; and
that the first indication indicates the association relationship comprises: a first value is less than or equal to a first threshold, wherein the first value is a value determined based on a difference between two strengths; the two strengths comprise: a strength of the signal that is from the first satellite and that is detected by the communication apparatus located in a first region at one of the two moments, and a strength of the signal that is from the second satellite and that is expected to be detected by the communication apparatus located in the first region at the other of the two moments; and the first region is one region in the coverage area of the first satellite.

15. The method according to claim 14, wherein the first parameter comprises a first strength of the signal that is from the first satellite and that is detected by the terminal apparatus at a first moment; and
the determining, by the terminal apparatus, the second parameter based on the first information and the first parameter comprises:
determining, by the terminal apparatus based on the first time interval and the first strength, a second strength of the signal that is from the second satellite and that is expected to be detected by the terminal apparatus at a second moment, wherein a difference between the second moment and the first moment is the first time interval.

16. The method according to claim 15, wherein the first information further comprises a first offset, and the first offset indicates an offset between the two strengths; and
the determining, by the terminal apparatus based on the first time interval and the first strength, a second strength of the signal that is from the second satellite and that is expected to be detected by the terminal apparatus at a second moment comprises:
determining, by the terminal apparatus, the second strength based on the first time interval, the first strength, and the first offset.

17. The method according to claim 12 or 13, wherein
the first information comprises the second time interval and a second indication;
the second time interval is a difference between two moments; and
that the second indication indicates the association relationship comprises: a second value is less than or equal to a second threshold, wherein the second value is a value determined based on a difference between two frequency offsets; the two frequency offsets comprise: a frequency offset of the signal that is from the first satellite and that is detected by the communication apparatus located in a second region at one of the two moments, and a frequency offset of the signal that is from the second satellite and that is expected to be detected by the communication apparatus located in the second region at the other of the two moments; and the second region is one region in the coverage area of the first satellite.

18. The method according to claim 17, wherein the first parameter comprises a first frequency offset of the signal that is of the first satellite and that is detected by the terminal apparatus at a third moment; and
the determining, by the terminal apparatus, the second parameter based on the first information and the first parameter comprises:
determining, by the terminal apparatus based on the second time interval and the first frequency offset, a second frequency offset of the signal that is from the second satellite and that is detected by the terminal apparatus at a fourth moment, wherein a difference between the fourth moment and the third moment is the second time interval.

19. The method according to claim 18, wherein the first information further comprises a second offset, and the second offset indicates an offset between the two frequency offsets; and
the determining, by the terminal apparatus based on the second time interval and the first frequency offset, a second frequency offset of the signal that is from the second satellite and that is detected by the terminal apparatus at a fourth moment comprises:
determining, by the terminal apparatus, the second frequency offset based on the second time interval, the first frequency offset, and the second offset.

20. The method according to claim 12 or 13, wherein
the first information comprises a third time interval and a third indication;
the third time interval is at least one of the following: a difference between expected start time of two time periods, a difference between expected end time of the two time periods, and a difference between expected end time of one of the two time periods and expected start time of the other of the two time periods;
the two time periods comprise a time period in which the first satellite covers a third region and a time period in which the second satellite covers the third region, and the third region is one region in the coverage area of the first satellite; and
that the third indication indicates the association relationship comprises: a third value is less than or equal to a third threshold, wherein the third value is a value determined based on a difference between first duration and second duration, the first duration is duration of the time period in which the first satellite covers the third region, and the second duration is duration of the time period in which the second satellite covers the third region.

21. The method according to claim 20, wherein the first parameter comprises a first time period in which the terminal apparatus detects the signal from the first satellite; and
the determining, by the terminal apparatus, the second parameter based on the first information and the first parameter comprises:
determining, by the terminal apparatus based on the third time interval and the first time period, a second time period in which the terminal apparatus is expected to be capable of detecting the signal from the second satellite.

22. The method according to claim 21, wherein the first information further comprises a third offset, and the third offset indicates an offset of the second duration relative to the first duration; and
the determining, by the terminal apparatus based on the third time interval and the first time period, a second time period in which the terminal apparatus is expected to be capable of detecting the signal from the second satellite comprises:
determining, by the terminal apparatus, the second time period based on the third time interval, the third offset, and the first time period.

23. A parameter determining apparatus, comprising a processor and a memory, wherein the processor is coupled to the memory, and the processor is configured to execute computer program instructions stored in the memory, to implement the method according to any one of claims 1 to 11.

24. A computer-readable storage medium, wherein the computer-readable storage medium stores a computer program; and when the computer program is run on a computer, the method according to any one of claims 1 to 11 is implemented.

25. A chip, wherein the chip is coupled to a memory, and the chip reads a computer program stored in the memory, to implement the method according to any one of claims 1 to 11.
